# EUROPEAN PATENT SPECIFICATION

(11) **EP 4 384 594 B1**
(45) Date of publication and mention of the grant of the patent: **08.10.2025**
(21) Application number: 22760752.0
(22) Date of filing: 10.08.2022
(51) Int. Cl.: C11D 3/37, C08F 283/06, C08L 51/08, C11D 11/00, C11D 3/00

(54) **BIODEGRADABLE GRAFT POLYMERS FOR DYE TRANSFER INHIBITION**
BIOLOGISCH ABBAUBARE PFROPFPOLYMERE ZUR INHIBIERUNG DER FARBSTOFFÜBERTRAGUNG
POLYMÈRES GREFFÉS BIODÉGRADABLES POUR L'INHIBITION DE TRANSFERT DE COLORANT

(30) Priority: 12.08.2021 EP 21191077; 06.04.2022 EP 22166886
(43) Date of publication of application: 19.06.2024
(73) Proprietor: BASF SE, 67056 Ludwigshafen am Rhein (DE)
(72) Inventor: MUELLER, Jan Ole, 67056 Ludwigshafen (DE); DETERING, Juergen, 67056 Ludwigshafen (DE); WEISS, Thomas, 67056 Ludwigshafen (DE); ESPER, Claudia, 67056 Ludwigshafen (DE); BETTHAUSEN, Eva Maria, 67056 Ludwigshafen (DE); GIEGER, Clarissa, 67056 Ludwigshafen (DE); BEAN, Jessica Eleanor, 67056 Ludwigshafen (DE)
(74) Representative: BASF IP Association
(86) International application number: PCT/EP2022/072400
(87) International publication number: WO 2023/017061

(56) References cited:
- WO-A1-2020/264077
- US-A1- 2008 255 326
- US-A1- 2019 390 142

## Description

This application relates to biodegradable graft polymers for use as dye transfer inhibitors especially in laundry applications.

The graft polymers of the invention comprise a polyalkylene oxide polymer as polymer backbone of the graft polymer and grafted side chains obtained from radically polymerizing at least one vinyl ester, at least one vinylimidazole-monomer or derivative thereof, and optionally at least one vinyl lactame in the presence of the polymer backbone.

The inventive graft polymers exhibit dye transfer inhibition properties; as they also are bio-degradable, they are useful polymers for laundry cleaning applications to prevent dye transfer.

The invention further relates to the production of such graft polymers.

Furthermore, the present invention relates to the use of such a graft polymer within fabric and home care products, and the use of such graft polymers for inhibiting the dye transfer in laundry applications. This invention also relates to fabric and home care products as such containing such a graft polymer. Such graft polymers for use in dye transfer inhibition are not yet known.

When laundering fabrics, dye transfer can cause challenges such as that dyes from one portion of a fabric may become suspended in a wash liquor and may then deposit on a different portion of the fabric, or on a different fabric altogether. Transfer of such dyes (known as "fugitive dyes") can cause dye graying and discoloration of fabrics, especially of those of a light or white color.

Certain polymers, generally known as dye transfer inhibitor/inhibition polymers ("DTI"-polymers; "DTI" also used for "dye transfer inhibition"), have traditionally been used in laundry compositions to address the dye transfer problem. Such polymers include poly-1-vinylpyrrolidone (PVP), poly(vinylpyridine-N-oxide) (PVNO), poly-1-vinylpyrrolidone-co-1-vinylimidazole (PVPVI), and polyvinylpyrrolidone (vinylpyridine-N-oxide (PVPVNO) polymers, which have typically included relatively high levels of 1-vinyl pyrrolidone ("VP"). These traditional DTI polymers are quite effective at inhibiting the transfer of direct dyes, but are not biodegradable due to their carbon-carbon-backbone, which cannot be attacked successfully by microbes.

Copolymers of 1-vinylimidazole and 1-vinylpyrrolidone and their use as efficient dye transfer inhibitor (DTI) in laundry application (liquid, gel-like and solid colour care detergents) are well known (such as "Sokalan^{®} HP 56" by BASF) and are regarded as "gold-standard". Those polymers show an excellent dye transfer inhibition at very low amounts, but are - as well as all the before mentioned other known DTI-polymers - not biodegradable in any significant amount as they also have a carbon-carbon-bonded polymer backbone chain.

However, biodegradation of such polymers for use in detergent applications is highly desirable, as a certain amount of consumer products containing such polymers is rinsed away after their use and may, if not biodegraded or otherwise removed in the sewage treatment plant, end up in the river or sea.

It is therefore highly desirable to identify better biodegradable ingredients for such applications.

This problem of poor biodegradability is predominantly serious for polymers produced by radical polymerization based on carbon-only backbones (i.e a backbone not containing heteroatoms such as oxygen or nitrogen), since a carbon-only backbone is particularly difficult to degrade for microorganisms. Even radically produced graft polymers of industrial importance with a polyethylene glycol backbone show only limited biodegradation in waste-water.

Low molecular weight polyethylene oxide with Mw of 600 g/mol is known to be easily biodegradable, whereas polyethylene oxide with Mw of 6000 g/mol is only poorly biodegradable. BASF's safety data sheet for Pluriol^{®} E 600, revised version 2.0, dated 05. January 2021, affirms for polyethylene glycol with Mw = 600 g/mol a DOC value (dissolved organic carbon) measured according to OECD 301A of > 70%. In contrast to that, the biodegradability of polyethylene glycol with Mw = 6000 g/mol is mentioned in BASF's safety data sheet for Pluriol^{®} E 6000 Pellet, revised version 2.0, dated 10. August 2018, to be only poor, showing only 10-20% CO2 formation relative to the theoretical value (60 d) according to OECD 301B.

Various further attempts have already been made to provide DTI-polymers of similar performance as the copolymers 1-vinylimidazole and 1-vinylpyrrolidone, but none has achieved a similar performance in DTI or/neither a useful bio-degradability.

WO 03/042262 relates to so-called "graft polymers" comprising (A) a polymer graft skeleton with no mono-ethylenic unsaturated units and (B) polymer sidechains formed from co-polymers of two different mono-ethylenic unsaturated monomers (B1) and (B2), each comprising a nitrogen-containing heterocycle, whereby the proportion of the sidechains (B) amounts to 35 to 55 wt. % of the total polymer.

However, the graft polymers according to WO 03/042262 do not employ vinyl ester monomers for the production of the respective polymer sidechains grafted onto the backbone. The performance of those polymers in DTI is acceptable but still far from the gold-standard. Bio-degradation is not mentioned. Those monomers are radically polymerized in the presence of the "polymer backbone", but turned out in the research leading to this present invention to be not reactive enough to achieve sufficient grafting and thus a sufficiently high performance at a given vinylimidazole-concentration.

US A 5,318,719 relates to a class of biodegradable water-soluble graft copolymers having building, anti-filming, dispersing and threshold crystal inhibiting properties comprising (a) an acid functional monomer and optionally (b) other water-soluble, monoethylenically unsaturated monomers copolymerizable with (a) grafted to a biodegradable substrate comprising polyalkylene oxides and/or polyalkoxylated materials. However, US-A 5,318,719 does employ for the production of the side chains of said graft polymers mandatorily a high amount of acid-functional monomers such as acrylic acid or methacrylic acid. Such type of acid monomers are not useful within the context of the present invention, as they would disturb the DTI-action of the amine-(imidazole) groups and lactam groups.

US 2019/0390142 relates to fabric care compositions that include a graft copolymer, which may be composed of (a) a polyalkylene oxide, such as polyethylene oxide (PEG); (b) N-vinylpyrrolidone (VP); and (c) a vinyl ester, such as vinyl acetate. However, US 2019/0390142 does not disclose further Nitrogen-containing monomers such as vinylimidazole. Also, the amounts of backbone and monomers employed and the intended uses differ.

WO 2007/138053 discloses amphiphilic graft polymers based on water-soluble polyalkylene oxides (A) as a graft base and side chains formed by polymerization of a vinyl ester component (B), said polymers having an average of less than one graft site per 50 alkylene oxide units and mean molar masses M of from 3 000 to 100 000. However, WO 2007/138053 does not contain any disclosure in respect of the biodegradability of the respective graft polymers disclosed therein nor does it disclose the use of vinylimidazole not vinyllactams nor any high amounts of nitrogen-containing monomers.

Unpublished patent application PCT/EP2021/053446 relates to graft polymers comprising a block copolymer backbone (A) as a graft base having polymeric sidechains (B) grafted thereon. The polymeric sidechains (B) are obtainable by polymerization of at least one vinyl ester monomer (B1) and optionally N-vinylpyrrolidone as optional further monomer (B2). Most preferably, the block copolymer backbone (A) is a triblock copolymer of polyethylene oxide (PEG) and polypropylene oxide (PPG). The invention further relates to the use of such a graft polymer within, for example, fabric and home care products. However, besides the only as "optional" included monomer vinylpyrrolidone and the required vinyl ester monomer, no other monomers are to be included, specifically no vinylimidazole-monomer. The application as a DTI is also not mentioned.

Y. Zhang et al. J. Coll. Inter. Sci 2005, 285, 80, relates to the synthesis and characterization of specific grafted polymers based on a pluronic-type backbone. Pluronic poly(ethylene oxide)-b-poly(propylene oxide)-b-poly(ethylene oxide) (PEO-PPO-PEO) block copolymers are grafted with poly(vinyl pyrrolidone) by free radical polymerization of vinyl pyrrolidone with simultaneous chain transfer to the Pluronic in dioxane. However, Y. Zhang does not disclose that polymeric sidechains of the respective graft polymer are based on vinyl ester monomers nor on vinylimidazole-monomers. Furthermore, Y. Zhang does not have any disclosure in respect of the biodegradability of the graft polymers disclosed therein. Y. Zhang also does not contain any disclosure about the use of such graft polymer within fabric and home care products.

WO2020/005476 discloses a fabric care composition comprising a graft copolymer and a so-called treatment adjunct, the graft copolymer comprising a polyalkylene oxide as backbone based on ethylene oxide, propylene oxide, or butylene oxide, preferably poly ethylene oxide, and N-vinylpyrrolidone and vinyl ester as grafted side chains on the backbone and with backbone and both monomers in a certain ratio. Vinylimidazole is not disclosed as a monomer. However, DTI is mentioned as target application of the inventive fabric care composition; the explicit use of the graft polymer as such as DTI-polymer is not explicitly disclosed besides a "belief" that if the molecular weight of the graft base, e.g. polyethylene glycol, is relatively low, there may be a performance decrease in dye transfer inhibition, but also that when the molecular weight is too high, the polymer may not remain suspended in solution and/or may deposit on treated fabrics. DTI-performance seems to be attributed to the specific combinations of compounds claimed but not the graft polymer as such alone, even more so, further "treatment adjuncts" mentioned as preferred ingredients are the known DTI-polymers as mentioned above as general state of the art known to a skilled person.

WO2020/264077 discloses cleaning compositions containing a combination of enzymes with a polymer such scomposition being suitable for removal of stains from soiled material.

This publication discloses a so-called "suspension graft copolymer" which is selected from the group consisting of poly (vinylacetate)-g-poly (ethylene glycol), poly(vinylpyrrolidone)-poly(vinyl acetate)-g-poly(ethylene glycol), and combinations thereof, and thus does not include vinylimidazole as monomer. Moreover, specifically claimed is that besides that suspension graft polymer typical known dye transfer inhibitor-polymers (those mentioned above as general state of the art known to a skilled person) are comprised in the claimed fabric cleaning compositions.

WO0018375 discloses pharmaceutical compositions comprising a graft polymers obtained by polymerization of at least one vinyl ester of aliphatic C1-C24-carboxylic acids in the presence of polyethers, with the vinyl ester preferably being vinyl acetate. In the most preferred version the graft polymer is prepared from grafting vinyl acetate on PEG of Mw 6000 g/mol and thereafter hydrolyzing the vinyl acetate to the alcohol (which would then resemblea polymer being obtained from the hypothetical monomer "vinlyalcohol"). Main use is the formation of coatings and films on solid pharmaceutical dosage forms such as tablets etc.

Also claimed in WO0018375 however is a polymer being obtained by polymerization of at least one vinyl ester of aliphatic C1-C6-carboxylic acids in the presence of polyethers with at least one monomer selected from the group of c1) C1-C6-alkyl esters of monoethylenically unsaturated C3-C8-carboxylic acids; c4) N-vinylpyrrolidone, N-vinylimidazole, N-vinylcaprolactam; c5) (meth)acrylic acid.

Also claimed in WO0018375 is a polymer wherein, in addition to the vinyl esters, at least one other monomer c) selected from the group ofc1) C1-C24-alkyl esters of monoethylenically unsaturated C3-C8-carboxylic acids; c2) C1-C24-hydroxyalkyl esters of monoethylenically unsaturated C3-C8-carboxylic acids; c3) C1-C24-alkyl vinyl ethers; c4) N-vinyllactams; c5) monoethylenically unsaturated C3-C8-carboxylic acids is used for the polymerization.

Further claimed in WO0018375 is also a polymer wherein, in addition to the vinyl esters, at least one other monomer c) selected from the group ofc1) C1-C6-alkyl esters of monoethylenically unsaturated C3-C8-carboxylic acids; c4) N-vinylpyrrolidone, N-vinylimidazole, N-vinylcaprolactam; c5) (meth)acrylic acid is used for the polymerization.

As polymer backbones in WO0018375 polyethers having a number average molecular weight in the range below 500000, preferably in the range from 300 to 100000, particularly preferably in the range from 500 to 20000, very particularly preferably in the range from 800 to 15000 g/mol are disclosed. It is further mentioned a advantageous to use homopolymers of ethylene oxide or copolymers with an ethylene oxide content of from 40 to 99% by weight and thus a content of ethylene oxide units in the ethylene oxide polymers preferably being employed from 40 to 100 mol %. Suitable as comonomers for these copolymers are said to be propylene oxide, butylene oxide and/or isobutylene oxide, with suitable examples being said to be copolymers of ethylene oxide and propylene oxide, copolymers of ethylene oxide and butylene oxide, and copolymers of ethylene oxide, propylene oxide and at least one butylene oxide. The ethylene oxide content in the copolymers is stated to be preferably from 40 to 99 mol %, the propylene oxide content from 1 to 60 mol % and the butylene oxide content in the copolymers from 1 to 30 mol %. Not only straight-chain but also branched homo- or copolymers are said to be usale as grafting base for the grafting.

Exemplified however are in WO0018375 only PEG 6000 and 9000, a "polyethylene glycol/polypropylene glycol block copolymer" (with average molecular weight "about 8000") and "polyglycerol" (with average molecular weight "2200") (all in g/mol). Five examples only employ vinyl acetate, and only one example employs vinylacetate and methyl methacrylate as monomers. No other monomers are exemplified. All examples employ as final step the hydrolysis of the polymerized vinyl acetate monomer.

Hence, no polymer is being produced and characterized in WO0018375 containing non-hydrolyzed vinyl acetate and the further required monomers as claimed in the present invention.

Also, no specific graft polymer is being disclosed nor claimed in WO0018375 being made from polyalkylene oxide polymers as polymer backbone and - as monomers for the grafted side chains - vinyl esters and vinyl imidazole and optionally vinyl pyrrolidone, as vinylpyrrolidone and vinylimidazole are mentioned in a list of at least 5 different monomers (one of it being a Markush group) but are not highlighted nor exemplified in any way. The disclosure as such focuses on different compositions comprising only PEGs, grafted with vinyl acetate and then hydrolyzed to vinyl alcohols for use a film-forming polymers in pharmaceutical applications.

Also not disclosed in WO0018375 is the use of such polymers as disclosed herein for detergent and cleaning or fabric care applications, and specifically not for use as DTI-polymers. No such application or uses are mentioned at all in this disclosure.

US 2019/390142 A1 does not disclose graft-polymers comprising vinyl imidazole as monomer, nor any other amine-containing monomer as required by the present invention. Also, the use of the graft polymers of this disclosure for inhibition of the transfer of dyes during washing is not disclosed. The only mentioned vinylimidazol-containing polymers being employed as dye transfer inhibitors within the disclosed compositions are the known copolymers of vinylimidazol and vinylpyrrolidone such as Sokalan HP 56, i.e. standard linear copolymers of those two monomers.

WO2020/264077 A1 similarly does not disclose any graft polymers comprising vinylimidazole or any other amine-containing monomers such as the ones required by the present invention. Also, the use of the graft polymers consisting of polyethylene glycol, vinyl acetate and vinyl pyrrolidone (i.e. a vinyl lactame) as dye transfer inhibitpors is not disclosed as well.

US2008/255326 discloses a process for preparing a graft polymer comprising a polyalkylene oxide polymer as a graft base, such as poly ethylene glycol, a vinyl ester such as vinyl acetate, and a vinyllactame such as vinyl pyrrolidone, both to be grafted onto the poly alkylene oxide-backbone, and optionally a monomer from a third category ("monomer c)") in amounts of zero to up to 10 (ten) weight percent based on the total amount of the graft monomers (with preferred ranges being 0 to 5 and more preferably 0 to 2 and most preferred "zero", i.e. not being present at all), with the total amount of graft monomers adding up to 100 weight percent, and the amount of all graft monomers being 10 to 95 weight percent based on the total weight of the resulting graft polymer. As optional "monomer c)" among many other entries also vinyl imidazole is listed. However, vinyl imidazole is nowhere preferred over the other monomers c), but is just one group within a list spreading over eight paragraphs of potentially employed monomers c). In the most preferred list of monomers c) vinyl imidazole is included, but this list consists of 13 monomers of totally different chemical structures and functionalities, from amides, to sulfonic acids to acrylic esters. It is also not in any way specifically highlighted for any special property it may impart to the graft polymer, nor it is mentioned in the disclosure as such that the graft polymer may be used for cleaning purposes, nor that it may be specifically usable as dye transfer inhibitor. This application is not mentioned at all in this disclosure, as it focusses on the production process of graft polymers and the application of such graft polymers for gas hydrate inhibition, which is a technical application of such polymers in the area of off-shore oil production, where those polymers are injected into the pipeline right at an oil drilling platform offshore. This has nothing to do with cleaning and interactions of a polymer with dyes within a cleaning process.

### Detailed description

As used herein, the articles"a" and"an" when used in a claim, are understood to mean one or more of what is claimed or described. As used herein, the terms "include(s)" and "including" are meant to be non-limiting, and thus encompass more than the specific item mentioned after those words.

The compositions of the present disclosure can "comprise" (i.e. contain other ingredients), "consist essentially of" (comprise mainly or almost only the mentioned ingredients and other ingredients in only very minor amounts, mainly only as impurities), or "consist of" (i.e. contain only the mentioned ingredients and in addition may contain only impurities not avoidable in an technical environment, preferably only the ingredients) the components of the present disclosure.

Similarly, the terms "substantially free of...." or "substantially free from..." or "(containing/comprising) essentially no...." may be used herein; this means that the indicated material is at the very minimum not deliberately added to the composition to form part of it, or, preferably, is not present at analytically detectable levels. It is meant to include compositions whereby the indicated material is present only as an impurity in one of the other materials deliberately included. The indicated material may be present, if at all, at a level of less than 1%, or even less than 0.1%, or even more less than 0.01%, or even 0%, by weight of the composition.

The term "about" as used herein encompasses the exact number "X" mentioned as e.g. "about X%" etc., and small variations of X, including from minus 5 to plus 5 % deviation from X (with X for this calculation set to 100%), preferably from minus 2 to plus 2 %, more preferably from minus 1 to plus 1 %, even more preferably from minus 0,5 to plus 0,5 % and smaller variations. Of course if the value X given itself is already "100%" (such as for purity etc.) then the term "about" clearly can and thus does only mean deviations therof which are smaller than "100".

Unless otherwise noted, all component or composition levels are in reference to the active portion of that component or composition, and are exclusive of impurities, for example, residual solvents or byproducts, which may be present in commercially available sources of such components or compositions.

All temperatures herein are in degrees Celsius (°C) unless otherwise indicated. Unless otherwise specified, all measurements herein are conducted at 20°C and under the atmospheric pressure. In all embodiments of the present disclosure, all percentages are by weight of the total composition, unless specifically stated otherwise. All ratios are weight ratios, unless specifically stated otherwise.

### Graft Polymer

The present invention encompasses a graft polymer comprising a polymer backbone as graft base as a first structural unit and polymeric side chains as a second structural unit.

The first structural unit of the graft polymer is a polymer backbone used as a graft base for the inventive graft polymer, wherein said polymer backbone (A) is obtainable by polymerization of at least one alkylene oxide monomer selected from the group of C2- to C10-alkylene oxides, preferably C2 to C5-alkylene oxides, such as ethylene oxide, 1,2 propylene oxide, 1,2 butylene oxide, 2,3 butylene oxide, 1,2-pentene oxide or 2,3 pentene oxide; from 1,4-diols or their cyclic or oligomeric analogs, or being based on polymeric ethers of such 1,4-diols; from 1,6-diols or their cyclic or oligomeric analogs, or being based on polymeric ethers of such 1,6-diols; or any of their mixtures in any ratio, either as blocks of certain polymeric units, or as statistical polymeric structures, or a polymers comprising one or more homo-block(s) of a certain monomer and one or more statistical block(s) comprising more than one such monomer, and any combination thereof such as polymers having several different blocks of different monomers, or blocks of two different monomers, blocks of statistical mixtures of two or more monomers etc.

The term "block (co)polymer (backbone)" as used herein means that the respective polymer comprises at least two (i.e. two, three, four, five or more) homo- or co-polymer subunits ("blocks") linked by covalent bonds. "Two-block" copolymers have two distinct blocks (homo- and/or co-polymer subunits), whereas "triblock" copolymers have, by consequence, three distinct blocks (homo- and/or co-polymer subunits) and so on. The number of individual blocks within such block copolymers is not limited; by consequence, a "n-block copolymer" comprises n distinct blocks (homo- and/or co-polymer subunits). Within the individual blocks the size/length of such a block may vary independently from the other blocks. The smallest length/size of a block is based on two individual monomers (as a minimum), but may be as large as 50. The respective monomers to be employed for preparing the individual blocks of a block copolymer backbone (A) may be added in sequence. However, it is also possible that there is a transition of the feed from one monomer to the other to produce so called "dirty structures" wherein at the edge/border of the respective block a small number of monomers of the respective neighboring block may be contained within the individual block to be considered (so called "dirty structures" or "dirty passages"). However, it is preferred that the block copolymer backbones (A) according to the present invention do not contain any dirty structures at the respective border of the blocks, although for commercial reasons (i.e. mainly cost for efficient use of reactors etc.) small amounts of dirty structures may still be contained although not deliberately being made.

Preferably at least one monomer in the polymer backbone stems from the use of ethylene oxide, and more preferably the polymer backbone is obtained from using only ethylene oxide.

In another embodiment more than one alkylene oxide monomer is comprised in the structure of the polymer backbone; in such case the polymer backbone is a random copolymer, a block copolymer or a copolymer comprising mixed structures of block units (with each block being a homo-block or a random block itself) and statistical /random parts comprised of two or more alkylene oxides, with one of the monomers being ethylene oxide. Preferably the further monomer beside ethylene oxide is propylene oxide and/or 1,2-butylene oxide, preferably only 1,2-propylene oxide.

In a further embodiment, the amount of ethylene oxide in the polymer backbone A is within 10 - 90 weight percent (in relation to the total molar amount of alkylene oxides in the polymer backbone (A)). More preferably, the monomers in the polymer backbone stem from the use of ethylene oxide and propylene oxide, with the amount of ethylene oxide in the polymer backbone A being within 10 to 90, preferably at least thirty, more preferably at least 50, even more preferably at least 70, most preferably at least 80 weight percent (in relation to the total molar amount of alkylene oxides in the polymer backbone (A)).

The polymer backbone may comprise an additional starting block, which is present when the preparation process for the polyalkylene oxide-polymer starts. This starting block reacts with alkylene oxides, and those chains further grow, leading to a polyalkylene oxide containing the starting block within the chain. Suitable starting blocks are such which can reacts with alkylene oxides and possess two hydroxyl groups, such as glycols, and alkylene glycols, and diols; preferably, those starting blocks are selected from glycerine, 2-methyl-1,3-propanediol, neopenthylglycol, diethyleneglycol, triethyleneglycol, dipropylene glycol, 1,3-propanediol, 1,3-butanediol, trismethylol propane, water, pentaerythritol, sorbitol, saccharose, glucose, fructose, lactose, and similar compounds having a similar chemical structure. Possible in principle are also diamines such as ethylene-diamine, propylene diamine, di-ethylene triamine, di-propylene triamine etc., but those amines are not preferred in view of potential problems with ecotoxicity, especially when released again from the polymer structures upon bio-degradation of the inventive graft polymers.

In a more preferred embodiment, such starting blocks are not employed within the polymer backbones of the present invention.

As the most preferred embodiment the polymer backbone is obtained from using only ethylene oxide and no other alkylene oxide-monomer.

The molecular weight of the polymer backbone (A) as given as "Mn" (number average molecular weight) in g/mol is within 500 to 12000, preferably not more than 9000, more preferably not more than 6000, even more preferably not more than 3500, further even more preferably not more than 3000, even further even more preferably not more than 2750, and at least 600, more preferably at least 1000, even more preferably at least 1500, and with all ranges being made up by combining any number detailed before for the lower border with any number detailed before as the upper border being understood to be comprised as inventive ranges. As more preferred range the Mn is from is from 600 to 3000, even more preferred from 1000 to 2750, and most preferred from 1500 to 2750.

The polymer backbone (A) is optionally capped at one or both end groups, the capping is done by C1-C25-alkyl groups using known techniques, preferably C1 to C4-groups.

In a preferred embodiment the polymer backbone (A) is not capped but bears hydroxy-groups at the chain ends.

The second structural unit of the graft polymer are polymeric side chains (B), which are grafted onto the polymer backbone (A), wherein said polymeric sidechains (B) are obtainable by co-polymerization of at least one monomer of (B1) and at least one monomer of (B2), with the monomers (B2) being at least one monomer (B2a) and optionally at least one further monomer (B2b):
Monomers (B1) are being selected from at least one vinyl ester monomer, preferably at least one monomer (B1) being selected from vinyl acetate, vinyl propionate and vinyl laurate and any other known vinyl ester monomer, more preferably from vinyl acetate and vinyl laurate, and most preferably vinyl acetate. The remaining amounts of vinyl ester monomer (B1) may be any other known vinyl ester monomer, such as vinyl valerate, vinyl pivalate, vinyl neodecanoate (such as VEOVA9 and VEOVA 10), vinyl decanoate or vinyl benzoate.

It is preferred that as vinyl ester only vinyl acetate and/or vinyl propionate, and more preferably at least 80 weight percent, even more preferably at least 90 weight percent, and most preferably essentially only (i.e. about 100wt.% or even 100 wt.%) vinyl acetate is employed as vinyl ester.

Monomers (B2) are being selected from at least one monomer from the group (B2a) and optionally also at least one monomer from the group (B2b).

At least one monomer (B2a) is to be used for preparing the polymeric side chains (B) of the inventive graft polymer, with at least one monomer (B2a) being an olefinically unsaturated amine-containing monomer, being preferably 1-vinylimidazole and/or its derivatives such as alkyl-substituted derivatives of 1-vinylimidazole such as 2-methyl-1-vinylimidazole, more preferably being only 1-vinylimidazole.

As optional further monomers (B2b) at least one monomer (B2b) may be used in addition to (B2a) and (B1) for preparing the polymeric side chains (B) of the inventive graft polymer, such at least one monomer (B2b) being a nitrogen-containing monomer, being preferably a vinyllactame-monomer, being more preferably selected from N-vinyllactams, such as N-vinylpyrrolidone, N-vinylpiperidone, N-vinylcaprolactam, even more preferably N-vinylpyrrolidone, N-vinylcaprolactam, and most preferably N-vinylpyrrolidone.

Further - not preferred - monomers (B2b) may be any one or more of 1-vinyl oxazolidinone and other vinyl oxazolidinones, 4-vinyl pyridine-N-oxide, N-vinyl formamide (and its amine if hydrolyzed after polymerization), N-vinyl acetamide, N-vinyl-N-methyl acetamide, acrylamide, methyl acrylamide, N,N'-di alkyl (meth) acrylamide; such monomers preferably being used in amounts less than the vinyllactame-monomers, such as up to 50, preferably up to 30, more preferably up to 10 and even more preferably up to 5 weight percent based on the weight of the vinyllactams employed, and most preferably not being employed at all.

Hence, in a more preferred embodiment of the invention, the graft polymer as defined herein does not include other monomers (B2b) other than vinyllactams-monomers as defined before.

Within the context of the present invention, it is preferred that no other monomers besides those as defined above as (B1), (B2a) and optionally (B2b) are employed within the respective polymerization process for obtaining the polymeric sidechains (B). However, if any further monomers besides the monomers according to (B1), (B2a) and optionally (B2b) are present, such further monomers are present in an amount of less than 3% of the total amount of monomers employed for obtaining the polymeric sidechains (B), and are preferably present only as impurities but not deliberately added for polymerisation. Preferably, the amount of said further monomers is less than 1, more preferably less than 0.5% by weight, even more preferably less than 0.01% by weight, most preferably, there isessentially no or even a total absence of any further monomer besides the monomers (B1), (B2a) and optionally (B2b).

The inventive graft polymers as detailed before in their composition contain the first and the second structural unit in the following amounts:
The amount of the polymer backbone (A) in weight percent being based on the total WEIGHT OF THE GRAFT POLYMER is from 30 to less than 89, preferably 40 to 80, more preferably 45 to 75, even more preferably 50 to 70, and most preferably 50 to 65; and
the amount of polymeric side chains (B) in weight percent being based on the total WEIGHT OF THE GRAFT POLYMER is from more than 11 to 70, preferably 20 to 60, more preferably 25 to 55, even more preferably 30 to 50 and most preferably 35 to 50.
The amount of (B1) in weight percent based on the total WEIGHT OF THE GRAFT POLYMER is from 1 to 30, preferably 3 to 25, more preferably 5 to 20, most preferably 5 to 15;
the amount of (B2) in weight percent being based on the total WEIGHT OF THE GRAFT POLYMER is from more than 10 to 60, preferably of 20 to 60, more preferably 20 to 50, even more preferably 20 to 40, most preferably 25 to 35;
the amount of (B2a) in weight percent based on the total amount of monomers (B2) is from 10 to 100, preferably of more than 10 to 100, more preferably more than 15 to 90, more preferably 20 to 90, more preferably at least 15, even more preferably at least 20, even more preferably at least 25, even more preferably at least 30 and even more preferably at least 35, and most preferably at least 40, and as upper limit at most 85, even more preferably at most 80, even more preferably at most 75, and most preferably at most 70, such as more than 10 and up to 90, more preferably 20 to 85, even more preferably 25 to 80, even more preferably 30 to 80, even more preferably 35 to 75, and most preferably 40 to 70, with the proviso that the amount of (B2a) in weight percent based on the total WEIGHT OF THE GRAFT POLYMER is always at minimum more than 10, preferably at least 12, more preferably at least 15, more preferably at least 17, even more preferably at least 20, and most preferably at least 25, and at most 60, more preferably at most 50, even more preferably at most 45, even more preferably at most 40, and most preferably at most 35; and
the amount of (B2b) in weight percent is equal to [100 % of the amount of (B2)] minus [the amount of (B2a)].

It is clear that all amounts of the required parts of the graft polymer, i.e. the amount of the polymer backbone (A) and all monomers (B1), (B2a) and (B2b) actually employed, have to add up to 100 percent per weight of the toal graft polymer. Likewise it is clear that the total amount for all monomers (B), all monomers (B1), all monomers (B2) each have to add up to "100%" of (B), (B1) and (B2), respectively,

Preferably, the amounts detailed before for (B1), (B2a) and (B2b) are combined with the amounts for (A) and (B). It is to be understood that the amounts for (A) and (B) may be selected from the various detailed ranges given independently from the various amounts and ranges given for (B1), (B2a) and (B2b): e.g. the most preferred range for (A) and (B) may be chosen and combined with the broadest possible ranges given for (B1) / (B2a) / (B2b), and any other possible combination. Preferably, for all selections possible to be made for (A)/(B) and (B1) / (B2a) / (B2b) the same selections are to be made, e.g. all "preferred" ranges are chosen, or - more preferably - all "more preferred" ranges are chosen, or - most preferably - all "most preferable" ranges are chosen.

Hence, in a more preferred embodiment the following amounts are chosen:
The amount of the polymer backbone (A) in weight percent being based on the total WEIGHT OF THE GRAFT POLYMER is most preferably 50 to 70; and
the amount of polymeric side chains (B) in weight percent being based on the total WEIGHT OF THE GRAFT POLYMER is most preferably 30 to 50; and
the amount of (B1) in weight percent based on the total WEIGHT OF THE GRAFT POLYMER is most preferably 5 to 15, or alternatively, but less preferred, 10 to 20;
the amount of (B2) in weight percent being based on the total WEIGHT OF THE GRAFT POLYMER is most preferably 25 to 35; and
the amount of (B2a) in weight percent based on the total amount of monomers (B2) is most preferably 40 to 70; and
the amount of (B2b) in weight percent based on the total amount of monomers (B2) is equal to [100 % of the amount of (B2)] minus [the amount of (B2a)].

In a more preferred embodiment the following amounts are chosen:
The amount of the polymer backbone (A) in weight percent being based on the total WEIGHT OF THE GRAFT POLYMER is 40 to 70; and
the amount of polymeric side chains (B) in weight percent being based on the total WEIGHT OF THE GRAFT POLYMER is 30 to 60; and
the amount of (B1) in weight percent based on the total WEIGHT OF THE GRAFT POLYMER is 5 to 15;
the amount of (B2) in weight percent being based on the total WEIGHT OF THE GRAFT POLYMER is 15 to 55; and
the amount of (B2a) in weight percent based on the total WEIGHT OF THE GRAFT POLYMER is 15 to 35; and
the amount of (B2b) in weight percent is equal to [100 % of the amount of (B2)] minus [the amount of (B2a)],
wherein preferably the polymer backbone (A) is a polyalkylene oxide comprising more than 70, preferably more than 80, even more preferably more than 90 weight percent of ethylene oxide based on total alkylene oxide, and most preferably only ethylene oxide, and
(B1) is vinyl acetate, (B2a) is vinylimidazole, and (B2b) is a vinyl lactame, preferably vinyl pyrrolidone.

In an even more preferred embodiment the following amounts are chosen:
The amount of the polymer backbone (A) in weight percent being based on the total WEIGHT OF THE GRAFT POLYMER is 45 to 65; and
the amount of polymeric side chains (B) in weight percent being based on the total WEIGHT OF THE GRAFT POLYMER is 40 to 55; and
the amount of (B1) in weight percent based on the total WEIGHT OF THE GRAFT POLYMER is 5 to 15;
the amount of (B2) in weight percent being based on the total WEIGHT OF THE GRAFT POLYMER is 25 to 50; and
the amount of (B2a) in weight percent based on the total WEIGHT OF THE GRAFT POLYMER is 15 to 30, preferably 20 to 30; and
the amount of (B2b) in weight percent is equal to [100 % of the amount of (B2)] minus [the amount of (B2a)],
wherein preferably the polymer backbone (A) is a polyalkylene oxide comprising more than 70, preferably more than 80, even more preferably more than 90 weight percent of ethylene oxide based on total alkylene oxide, and most preferably only ethylene oxide, and
(B1) is vinyl acetate, (B2a) is vinylimidazole, and (B2b) is a vinyl lactame, preferably vinyl pyrrolidone.

In a preferred embodiment, the graft polymer as detailed before is made from a polymer backbone (A) which itself is comprises only ethylene oxide as monomer and/or the polymeric side chains (B) consist of vinyl acetate as the only monomer (B1), 1-vinyl imidazole as the only monomer (B2a), and (B2b) is a N-vinyllactame, preferably is N-vinylpyrrolidone.

In another preferred embodiment, the graft polymer as detailed before is made from a polymer backbone (A) which itself is comprises only ethylene oxide as monomer and the polymeric side chains (B) consist of vinyl acetate as the only monomer (B1) and 1-vinyl imidazole as the only monomer (B2a), with no monomer (B2b) being present.

In a more preferred embodiment the graft polymer as detailed before is made from a polymer backbone (A) which itself is comprises only ethylene oxide as monomer and the polymeric side chains (B) consist of vinyl acetate as the only monomer (B1), 1-vinyl imidazole as the only monomer (B2a), and (B2b) is a N-vinyllactame, preferably is N-vinylpyrrolidone.

In an even more preferred embodiment, the preferred selections for the monomers as detailed before and the preferred selections for the amounts as detailed before are combined.

In another embodiment, the graft polymer is detailed as follows:
the polymer backbone (A) is present in amounts in weight percent being based on the total WEIGHT OF THE GRAFT POLYMER of 50 to 70 and comprises only ethylene oxide as monomer; and
the amount of polymeric side chains (B) in weight percent being based on the total WEIGHT OF THE GRAFT POLYMER is 30 to 50; and
the amount of (B1) in weight percent based on the total WEIGHT OF THE GRAFT POLYMER is 10 to 20 with vinyl acetate as the only monomer (B1); and
the amount of (B2) in weight percent being based on the total WEIGHT OF THE GRAFT POLYMER is 25 to 35; and
the amount of (B2a) in weight percent based on the total amount of monomers (B2) is 40 to 70 and with 1-vinyl imidazole as the only monomer (B2a); and
the amount of (B2b) in weight percent based on the total amount of monomers (B2) is equal to [100 % of the amount of (B2)] minus [the amount of (B2a)], with (B2b) being a N-vinyllactame, preferably being only N-vinylpyrrolidone.

The inventive graft polymer as detailed before has a polydispersity (PDI) Mw/Mn of less than 7, preferably less than 5, more preferably less than 4, and most preferably in the range from 1 to 3 (with Mw = weight average molecular weight in g/mol, and Mn = number average molecular weight in g/mol; with the PDI being unitless), with lower numbers being preferred, but depending on the Mn of the polymer backbone employed (the higher the Mn of (A) also typically the higher the PDI) and also on the amount of (B) (the higher the amount of (B) relative to the amount of (A) typically the higher the PDI).

The respective values of M_{w} and Mₙ can be determined as described within the experimental section below.

The graft polymers of the invention may contain a certain amount of ungrafted polymers ("ungrafted side chains") made of vinyl ester(s), e.g. polyvinylacetate, and/or - depending on the employed monomers and their respective reactivities towards co-polymerisation - copolymers of vinyl ester(s) with the other monomers or even small amounts of copolymers of the other monomers employed. The amount of such ungrafted polymers may be high or low, depending on the reaction conditions, but is preferably to be lowered and thus is more preferably low. By this lowering, the amount of grafted side chains is preferably increased. Such lowering can be achieved by suitable reaction conditions, such as dosing of vinyl ester and radical initiator and their relative amounts and also in relation to the amount of backbone being present. This is generally known to a person of skill in the present field.

In another embodiment of the present invention, the vinyl acetate polymerized within the polymeric sidechains (B) may be fully or partially hydrolyzed after the graft polymer as such is obtained. This means that the full or at least partial hydrolyzation of the polymeric sidechains (B) of the graft polymer is carried out after the polymerization process of the polymeric sidechains (B) is finished.

Due to this full or partial hydrolyzation the respective sidechain units originating from the at least one vinyl ester monomer (B1) are changed from the respective ester function into the alcohol function within the polymeric sidechain (B). It has to be noted that the corresponding vinyl alcohol is not suitable to be employed as monomer within the polymerization process of the polymeric sidechains (B) as the "vinyl alcohol" is not stable as such. In order to obtain an alcohol function (hydroxy substituent) within the polymeric sidechains (B) of the graft polymers according to the present invention, the alcohol function thus is typically introduced by hydrolyzing the ester function of the sidechains.

From a theoretical point of view, each ester function of the polymeric sidechain (B) may be replaced by an alcohol function (hydroxy group). In such a case, the polymeric sidechain is fully hydrolyzed (saponified) with respect to the amount of vinyl ester. It is to be noted that neither vinylimidazole nor in case N-vinylpyrrolidone is employed as further monomer, typically no hydrolyzation takes place at those units of the polymeric sidechain (B) which originates from vinyl-imidazole nor N-pyrrolidone employed as further monomers.

The hydrolysis can be carried out by any method known to a person skilled in the art. For example, the hydrolysis can be induced by addition of a suitable base, such as sodium hydroxide or potassium hydroxide.

However, within this embodiment of the present invention it is preferred that the hydrolyzation of the polymeric sidechains (B) with respect to the amount of vinyl ester is only carried out partially, for example, to an extend of up to 20wt.%, 40wt.% or 60wt.% (in relation to the total weight of the polymeric sidechains).

Within this embodiment, it is preferred that the polymeric sidechains (B) with respect to the amount of vinyl ester are fully or partially hydrolyzed after polymerization, preferably to an extent of up to 50% in relation to the amount of the at least one vinyl ester monomer (B1) employed within the polymerization.

However, in a preferred embodiment of this invention, the polymeric sidechains (B) of the graft polymer as detailed in extenso before are not hydrolyzed after polymerization.

It has been found that the inventive graft polymers as detailed herein before exhibit an improved bio-degradability which is at least 20, preferably at least 30, even more preferably at least 40 % within 28 days when tested under OECD301F, and may be at least 45, 50, 55, 60 or even 65, and all numbers in between.

### Process

The invention also encompasse a process for obtaining a graft polymer as detailed herein before, wherein the process comprise a step of polymerizing the monomers (B1), (B2a) and optional (B2b) in the presence of at least one polymer backbone (A) as detailed herein before, to obtain the polymeric sidechains (B) grafted onto the polymer backbone (A) and thus the "graft polymer" of the invention.

It has to be noted that the "grafting process" as such, wherein a polymeric backbone, such as the polymer backbone (A) described herein abbove, is grafted with polymeric sidechains, is known to a person skilled in the art. Any process known to the skilled person in this respect can in principle be employed within the present invention.

The invention also encompasse a process for obtaining a graft polymer as detailed herein before, wherein the process comprise a step of polymerizing at least one monomer (B1) as detailed herein before, at least one monomer (B2a) as detailed herein before, optional at least one monomer (B2b) as detailed herein before in the presence of at least one polymer backbone (A) as detailed herein before, to obtain the polymeric sidechains (B) grafted onto the polymer backbone (A), preferably by way of radical polymerization, more preferably using radical forming compounds to initiate the radical polymerization.

The radical polymerization as such is also known to a skilled person. That person also knows that the inventive process can be carried out in the presence of a radical-forming initiator (C) and/or at least one solvent (D). The skilled person knows the respective components as such.

The term "radical polymerization" as used within the context of the present invention comprises besides the free radical polymerization also variants thereof, such as controlled radical polymerization. Suitable control mechanisms are RAFT, NMP or ATRP, which are each known to the skilled person, including suitable control agents.

In a preferred embodiment the process to obtain the graft polymer of the invention as detailed herein before comprise the polymerization of at least one monomer (B1), at least one monomer (B2a), optionally at least one monomer (B2b) in the presence of at least one polymer backbone (A) (with B1, B2a, B2b and A as detailed herein before in their respective ranges including the respective "preferred", "more preferred" etc "most preferred" ranges, amounts and selections and the combinations thereof as described in detail above), a free radical-forming initiator (C) and, if desired, up to 50% by weight, based on the sum of components (A), (B1), (B2a), optional (B2b), and (C,), of at least one organic solvent (D), at a mean polymerization temperature at which the initiator (C) has a decomposition half-life of from 40 to 500 min, in such a way that the fraction of unconverted graft monomers (B1 and B2) and initiator (C) in the reaction mixture is constantly kept in a quantitative deficiency relative to the polymer backbone (A).

The amount of ((free) radical-forming) initiator (C) is preferably from 0.1 to 5% by weight, in particular from 0.3 to 3.5% by weight, based in each case on the polymeric sidechains (B).

For the process according to the invention, it is preferred that the steady-state concentration of radicals present at the mean polymerization temperature is substantially constant and the graft monomers (B1) or (B2) are present in the reaction mixture constantly only in low concentration (for example of not more than 5% by weight). This allows the reaction to be controlled, and graft polymers can be prepared in a controlled manner with the desired low polydispersity.

The term "mean polymerization temperature" is intended to mean here that, although the process is substantially isothermal, there may, owing to the exothermicity of the reaction, be temperature variations which are preferably kept within the range of +/- 10°C, more preferably in the range of +/-5°C.

According to the invention, the (radical-forming) initiator (C) at the mean polymerization temperature should have a decomposition half-life of from 40 to 500 min, preferably from 50 to 400 min and more preferably from 60 to 300 min.

According to the invention, the initiator (C) and the graft monomers (B1), (B2a) and optional (B2b) are advantageously added in such a way that a low and substantially constant concentration of undecomposed initiator and graft monomers (B1), (B2a) and optional (B2b) is present in the reaction mixture. The proportion of undecomposed initiator in the overall reaction mixture is preferably up to 15% by weight, in particular up to 10% by weight, based on the total amount of initiator metered in during the monomer addition. "Low concentration of graft monomers" means in this respect a concentration of up to 20, preferably up to 15, more preferably up to 10, most preferably up to 5 weight percent of the total amount of each monomer to be added.

At the end of the polymerization the amount of residual monomers preferably is very low, such as below 0,5 weight percent, more preferably below 0,1, even more preferably below 0,05 and most preferably of below 0,01 or even 0,005 weight percent based on the polymer solids. This can be achieved by suitable long polymerization duration, addition of additional radical inititiator at the end, increase of polymerization temperature, or any combination of those measures.

In a preferred embodiment the steady-state concentration of radicals present at the mean polymerization temperature is substantially constant.

To assure a safe temperature control although - especially when a polymerization starting in bulk and/or with a large amount of monomers being present from the start on - it is advisable, and thus preferred, to use an additional and efficient measure to control the temperature. This can be done by external or internal cooling; such cooling can be done by internal and/or external coolers such as heat exchangers, and/or using reflux condensers when working at the boiling temperature of the solvent or the solvent mixture.

The same measure could of course be used for for an embodiment wherein the monomers are added over a prolongend period of time, and thus the monomer concentration in the reaction volume being contantly low over time, this is usually not a crucial point, as the temperature is at least partially controlled also by the propagation of the polymerization reaction by controlling the radical concentration and the available amount of polyerizable monomers.

Of course, depending on the scale of the polymerisation reaction, such additional cooling as described before may become necessary for both variants - batch reaction or bulk reactions with large amounts of monomer present from the start or semi-continuous or continuous polymerization reactions with typically contstantly low monomer concentrations - when the scale gets large enough that the ratio from volume to surface of the polymerization mixture becomes very large.

This however is generally known to a person of skill in the art of commercial scale polymerisations, and thus can be adapted to the needs.

The mean polymerization temperature is appropriately in the range from 50 to 140°C, preferably from 60 to 120°C and more preferably from 65 to 110°C.

Examples of suitable initiators (C) whose decomposition half-life in the temperature range from 50 to 140°C is from 20 to 500 min are:
- O-C₂-C₁₂-acylated derivatives of tert-C₄-C₁₂-alkyl hydroperoxides and tert-(C₉-C₁₂-aralkyl) hydroperoxides, such as tert-butyl peroxyacetate, tert-butyl monoperoxymaleate, tert-butyl peroxyisobutyrate, tert-butyl peroxypivalate, tert-butyl peroxyneoheptanoate, tert-butyl peroxy-2-ethylhexanoate, tert-butyl peroxy-3,5,5-trimethylhexanoate, tert-butyl peroxyneodecanoate, tert-amyl peroxypivalate, tert-amyl peroxy-2-ethylhexanoate, tert-amyl peroxyneodecanoate, 1,1,3,3-tetramethylbutyl peroxyneodecanoate, cumyl peroxyneodecanoate, tert-butyl peroxybenzoate, tert-amyl peroxybenzoate and di-tert-butyl diperoxyphthalate;
- di-O-C₄-C₁₂-acylated derivatives of tert-C₈-C₁₄-alkylene bisperoxides, such as 2,5-dimethyl-2,5-di(2-ethylhexanoylperoxy)hexane, 2,5-dimethyl-2,5-di(benzoylperoxy)hexane and 1,3-di(2-neodecanoylperoxyisopropyl)benzene;
- di(C₂-C₁₂-alkanoyl) and dibenzoyl peroxides, such as diacetyl peroxide, dipropionyl peroxide, disuccinyl peroxide, dicapryloyl peroxide, di(3,5,5-trimethylhexanoyl) peroxide, didecanoyl peroxide, dilauroyl peroxide, dibenzoyl peroxide, di(4-methylbenzoyl) peroxide, di(4-chlorobenzoyl) peroxide and di(2,4-dichlorobenzoyl) peroxide;
- tert-C₄-C₅-alkyl peroxy(C₄-C₁₂-alkyl)carbonates, such as tert-amyl peroxy(2-ethylhexyl)carbonate;
- di(C₂-C₁₂-alkyl) peroxydicarbonates, such as di(n-butyl) peroxydicarbonate and di(2-ethylhexyl) peroxydicarbonate.

Depending on the mean polymerization temperature, examples of particularly suitable initiators (C) are:
- at a mean polymerization temperature of from 50 to 60°C:
   tert-butyl peroxyneoheptanoate, tert-butyl peroxyneodecanoate, tert-amyl peroxypivalate, tert-amyl peroxyneodecanoate, 1,1,3,3-tetramethylbutyl peroxyneodecanoate, cumyl peroxyneodecanoate, 1,3-di(2-neodecanoyl peroxyisopropyl)benzene, di(n-butyl) peroxydicarbonate and di(2-ethylhexyl) peroxydicarbonate;
- at a mean polymerization temperature of from 60 to 70°C:
   tert-butyl peroxypivalate, tert-butyl peroxyneoheptanoate, tert-butyl peroxyneodecanoate, tert-amyl peroxypivalate and di(2,4-dichlorobenzoyl) peroxide;
- at a mean polymerization temperature of from 70 to 80°C:
   tert-butyl peroxypivalate, tert-butyl peroxyneoheptanoate, tert-amyl peroxypivalate, dipropionyl peroxide, dicapryloyl peroxide, didecanoyl peroxide, dilauroyl peroxide, di(2,4-dichlorobenzoyl) peroxide and 2,5-dimethyl-2,5-di(2-ethylhexanoylperoxy)hexane;
- at a mean polymerization temperature of from 80 to 90°C:
   tert-butyl peroxyisobutyrate, tert-butyl peroxy-2-ethylhexanoate, tert-amyl peroxy-2-ethylhexanoate, dipropionyl peroxide, dicapryloyl peroxide, didecanoyl peroxide, dilauroyl peroxide, di(3,5,5-trimethylhexanoyl) peroxide, dibenzoyl peroxide and di(4-methylbenzoyl) peroxide;
- at a mean polymerization temperature of from 90 to 100°C:
   tert-butyl peroxyisobutyrate, tert-butyl peroxy-2-ethylhexanoate, tert-butyl monoperoxymaleate, tert-amyl peroxy-2-ethylhexanoate, dibenzoyl peroxide and di(4-methylbenzoyl) peroxide;
- at a mean polymerization temperature of from 100 to 110°C:
   tert-butyl monoperoxymaleate, tert-butyl peroxyisobutyrate and tert-amyl peroxy(2-ethylhexyl)carbonate;
- at a mean polymerization temperature of from 110 to 120°C:
   tert-butyl monoperoxymaleate, tert-butyl peroxy-3,5,5-trimethylhexanoate and tert-amyl peroxy(2-ethylhexyl)carbonate.

Preferred initiators (C) are O-C₄-C₁₂-acylated derivatives of tert-C₄-C₅-alkyl hydroperoxides, particular preference being given to tert-butyl peroxypivalate and tert-butyl peroxy-2-ethylhexanoate.

Particularly advantageous polymerization conditions can be established effortlessly by precise adjustment of initiator (C) and polymerization temperature. For instance, the preferred mean polymerization temperature in the case of use of tert-butyl peroxypivalate is from 60 to 80°C, and, in the case of tert-butyl peroxy-2-ethylhexanoate, from 80 to 100°C.

The inventive polymerization reaction can be carried out in the presence of, preferably small amounts of, an organic solvent (D). It is of course also possible to use mixtures of different solvents (D). Preference is given to using water-soluble or water-miscible solvents.

When a solvent (D) is used as a diluent, generally from 1 to 40% by weight, preferably from 1 to 35% by weight, more preferably from 1.5 to 30% by weight, most preferably from 2 to 25% by weight, based in each case on the sum of the components (A), (B1), optionally (B2), and (C), are used.

Examples of suitable solvents (D) include:
- monohydric alcohols, preferably aliphatic C₁-C₁₆-alcohols, more preferably aliphatic C₂-C₁₂-alcohols, most preferably C₂-C₄-alcohols, such as ethanol, propanol, isopropanol, butanol, sec-butanol and tert-butanol;
- polyhydric alcohols, preferably C₂-C₁₀-diols, more preferably C₂-C₆-diols, most preferably C₂-C₄-alkylene glycols, such as ethylene glycol, 1,2-propylene glycol and 1,3-propylene glycol;
- alkylene glycol ethers, preferably alkylene glycol mono(C₁-C₁₂-alkyl) ethers and alkylene glycol di(C₁-C₆-alkyl) ethers, more preferably alkylene glycol mono- and di(C₁-C₂-alkyl) ethers, most preferably alkylene glycol mono(C₁-C₂-alkyl) ethers, such as ethylene glycol monomethyl and - ethyl ether and propylene glycol monomethyl and -ethyl ether;
- polyalkylene glycols, preferably poly(C₂-C₄-alkylene) glycols having 2-20 C₂-C₄-alkylene glycol units, more preferably polyethylene glycols having 2-20 ethylene glycol units and polypropylene glycols having 2-10 propylene glycol units, most preferably polyethylene glycols having 2-15 ethylene glycol units and polypropylene glycols having 2-4 propylene glycol units, such as diethylene glycol, triethylene glycol, dipropylene glycol and tripropylene glycol;
- polyalkylene glycol monoethers, preferably poly(C₂-C₄-alkylene) glycol mono(C₁-C₂₅-alkyl) ethers having 2-20 alkylene glycol units, more preferably poly(C₂-C₄-alkylene) glycol mono(C₁-C₂₀-alkyl) ethers having 2-20 alkylene glycol units, most preferably poly(C₂-C₃-alkylene) glycol mono(C₁-C₁₆-alkyl) ethers having 3-20 alkylene glycol units;
- carboxylic esters, preferably C₁-C₈-alkyl esters of C₁-C₆-carboxylic acids, more preferably C₁-C₄-alkyl esters of C₁-C₃-carboxylic acids, most preferably C₂-C₄-alkyl esters of C₂-C₃-carboxylic acids, such as ethyl acetate and ethyl propionate;
- aliphatic ketones which preferably have from 3 to 10 carbon atoms, such as acetone, methyl ethyl ketone, diethyl ketone and cyclohexanone;
- cyclic ethers, in particular tetrahydrofuran.

The solvents (D) are advantageously those solvents, which are also used to formulate the inventive graft polymers for use (for example in washing and cleaning compositions) and can therefore remain in the polymerization product.

Preferred examples of these solvents are polyethylene glycols having 2-15 ethylene glycol units, polypropylene glycols having 2-6 propylene glycol units and in particular alkoxylation products of C₆-C₈-alcohols (alkylene glycol monoalkyl ethers and polyalkylene glycol monoalkyl ethers).

Particular preference is given here to alkoxylation products of C₈-C₁₆-alcohols with a high degree of branching, which allow the formulation of polymer mixtures which are free-flowing at 40-70°C and have a very low polymer content at comparatively low viscosity. The branching may be present in the alkyl chain of the alcohol and/or in the polyalkoxylate moiety (copolymerization of at least one propylene oxide, butylene oxide or isobutylene oxide unit). Particularly suitable examples of these alkoxylation products are 2-ethylhexanol or 2-propylheptanol alkoxylated with 1-15 mol of ethylene oxide, C₁₃/C₁₅ oxo alcohol or C₁₂/C₁₄ or C₁₆/C₁₈ fatty alcohol alkoxylated with 1-15 mol of ethylene oxide and 1-3 mol of propylene oxide, preference being given to 2-propylheptanol alkoxylated with 1-15 mol of ethylene oxide and 1-3 mol of propylene oxide.

In the process according to the invention, polymer backbone (A), graft monomer (B1), (B2a) and optional (B2b), initiator (C) and, if appropriate, solvent (D) are usually heated to the selected mean polymerization temperature in a reactor.

In a preferred embodiment, basically no solvent (D) is added for the polymerization reaction except for the radical initiator being dissolved in small amounts of organic solvents as disclosed hereinafter.

In case almost no solvent or no solvent is added, the reaction proceeds in the liquid state. This liquid state is either already present - in case when the backbone is a liquid - or the reaction is performed when the backbone is molten.

Depending on the amounts of monomers being present right from the start of the polymerization reaction, liquid monomers may help to achieve such liquid state.

**Small amounts** of organic solvents may be used, and preferably are used, for introducing for example the radical initiator as well as the graft monomers (B1) and/or (B2) which might be soluble to a reasonable extent only in such organic solvents but not necessarily in water. Suitable organic solvents may be isopropanol, ethanol, 1,2-propandiol and/or tripropylene glycol, and/or other suitable alcohols or organic solvents like 1-methoxy-2-propanol which are considerably inexpensive and available for large-scale uses, or solvents like ethyl acetate, methyl ethyl ketone, and the like, with isopropanol, 1,2-propandiol, 1-Methoxy-2-propanol, ethyl acetate and/or tripropylene glycol being preferred solvents, preferably only introduced in the reaction as solvents for the radical initiator and/or the graft monomers (B1) and/or (B2) in as low amounts as possible, more preferably only for the radical initiator(s). In case the radical initiator is soluble in water, then of course it is possible to use water as solvent for intrioducing the readical initiator, or mixtures of organic solvent and water.

The radical initiator (C) is preferably employed in the form of a concentrated solution in one of the solvents mentioned before. The concentration of course depends on the solubility of the radical initiator. It is preferred, that the concentration is as high as possible to allow to introduce as little as possible of the solvent into the polymerization reaction.

In such cases of low overall amounts of solvent(s), such solvents may be left in the final polymer, preferably may be left when the overall amount based on total solvents is less than 1, preferably less than 0,5, more preferably less than 0,1 weight percent. In case of using water as one of the solvents, larger amounts are of course acceptable - depending on the intended use.

The monomers are preferably employed in their pure form, or - not preferred - in the form of a 10 to 95% by weight solution in one of the solvents mentioned before. Here again, it is preferred, that the concentration is as high as possible to allow to introduce as little as possible of the organic solvent into the polymerization reaction.

For solvents having a boiling point of approximately less than 110-120 °C at atmospheric pressure, such solvents may - as a purification step - be removed partially or essentially complete by thermal or vacuum distillation or stripping with a gas such as steam or nitrogen, such as stripping with steam made from water, all at ambient or reduced pressure, preferably vacuum distillation, whereas higher boiling solvents will usually stay in the polymer products obtained. When mercaptoethanol is employed as chain transfer regulator, steam distillation is the preferred step of purification. Hence, higher boiling solvents like 1-methoxy-2-propanol, 1,2-propandiol and tripropylene glycol will stay in the polymer product, and thus their amounts should be minimized as far as possible by using as high as possible concentrations of the radical initiator when such solvents are used only for introducing the initiator, unless such solvents form also part of the formulation the graft polymer will be used within.

According to the invention, the polymerization is carried out in such a way that an excess of polymer (polymer backbone (A) and formed graft polymer (B)) is constantly present in the reactor. The quantitative ratio of polymer to ungrafted monomer and initiator is generally ≥ 10:1, preferably ≥ 15:1 and more preferably ≥ 20:1.

**The polymerization** process according to the invention can in principle be carried out in various reactor types.

The reactor used is preferably a stirred tank in which the polymer backbone (A), if appropriate together with portions, of generally up to 15% by weight of the particular total amount, of graft monomers (B1), (B2a) and optional (B2b), initiator (C) and solvent (D), are initially charged fully or partly and heated to the polymerization temperature, and the remaining amounts of (B1), (B2a) and optional (B2b), (C) and, if appropriate, (D) are metered in, preferably separately. The remaining amounts of (B1), (B2a) and optional (B2b), (C) and, if appropriate, (D) are metered in preferably over a period of ≥ 2 h, more preferably of ≥ 4 h and most preferably of ≥ 5 h.

In the case of the particularly preferred, substantially solvent-free process variant, the entire amount of polymer backbone (A) is initially charged as a melt (if solid at ambient temperatures) or as preheated liwquid (in case it is a viscous liquid with unsuitable high viscosity for handling) and the graft monomers (B1), (B2a) and optional (B2b), and also the initiator (C) present preferably in the form of a from 10 to 50% by weight solution in one of the solvents (D), are metered in, the temperature being controlled such that the selected polymerization temperature, on average during the polymerization, is maintained within a range of especially +/- 10°C, in particular +/- 5°C.

In a further particularly preferred, low-solvent process variant, the procedure is as described above, except that solvent (D) is metered in during the polymerization in order to limit the viscosity of the reaction mixture. It is also possible to commence with the metered addition of the solvent only at a later time with advanced polymerization, or to add it in portions.

The polymerization can be affected under standard pressure or at reduced or elevated pressure. When the boiling point of the monomers (B1), (B2a) and optional (B2b) or of any diluent (D) used is exceeded at the selected pressure, the polymerization is carried out with reflux cooling.

A post-polymerization process step may be added after the main polymerization reaction. For that a further amount of initiator (dissolved in the solvent(s)) can be added over a period of 0,5 hour and up to 3 hours, preferably about 1 to 2 hours, more preferably about 1 hour, with the radical initiator and the solvent(s) for the initiator typically - and preferred - being the same as the ones for the main polymerization reaction. Of course a different radical initiator and/or different solvent(s) may be employed as well.

In between the post-polymerisation and the main polymerization a certain period of time may be waited, where the main polymerization reaction is left to proceed, before the post-polymerisation reaction is started by starting the addition of further radical initiator. Such period for watiting typically is from about 0,1 hour and up to 3 hours, preferably about 0,2 to 2 hours, more preferably up to about 1 hour.

The temperature of the post-polymerisation process step may be the same as in the main polymerization reaction (which is preferred in this invention), or may be increased. In case increased, it may be typically higher by about 5 to 40°C, preferably 10 to 20°C. In an alternative embodiment the post-polymerisation temperature can be the same as employed for the main polymerization step. The graft polymer of this invention, i.e. the polymer solution obtained from the process, may be also subjected to a means of concentration or drying to remove part of or almost all of the remaining solvent(s) (as far as they are removable due to their boiling points).

The graft polymer solution obtained may be concentrated by removing part of the solvent(s) to increase the solid polymer concentration. This may be achieved by distillation processes such as thermal or vacuum distillation, preferably vacuum distillation, which is performed until the desired solid content is achieved. Such process can be combined with the purification step as disclosed before wherein the graft polymer solution obtained is purified by removing part or all of the volatile components such as volatile solvents and/or unreacted, volatile monomers, by removing the desired amount of solvent.

The graft polymer solution may be also after the main and/or the optional post-polymerization step and the optional purification step further concentrated or dried by subjecting the graft polymer solution to a means of removing the volatiles partially or fully, such as drying such as roller-drum drying, spray-drying, vacuum drying or freeze-drying, preferably - mainly for cost-reasons - spray-drying. Such drying process may be also combined with an agglomeration or granulation process such as spray-agglomeration, spray-granulation or drying in e.g. a fluidized-bed dryer. All such methods are in principle known and are in principle applicable to this present graft polymer.

The graft polymer obtained form the inventive process resembles that as detailed above describing the polymer structure in all of its embodiments, variations, and preferred, more preferred et. Embodiments, and including also the detailed embodiments as further described in the "Embodiment 1/2/3 etc." as listed at the end of the description herein below.

### Uses

In principle the graft polymers of this invention can be employed in any application to replace known graft polymers of similar composition (however not comprising vinylimidazole) (in terms of relative amounts of polymer backbone and grafted monomers especially when the type and amounts of grafted monomers is comparable, such as graft polymers being referenced in the prior art section of this disclosure. Such applications are for example:
Cosmetics, Personal Care: Such compositions and formulations include shampoos, lotions, gels, sprays, soap, make-up powder, lipsticks, hairspray.

Technical applications: Such compositions and formulations include glues of any kind, non-water and - preferably - water-based liquid formulations or solid formulations, the use as dispersant in dispersions of any kind, such as in oilfield applications, automotive applications, typically where a solid or a liquid is to be dispersed within another liquid or solid.

Lacquer, paints and colorants formulations: Such compositions and formulations include non-water- and - preferably - water-based lacquer and colourants, paints, finishings.

Agricultural Formulations: Such compositions and formulations include formulations and compositions containing agrochemical actives within a liquid, semi-solid, mixed-liquid-solid or solid environment.

Aroma Chemical-formulations: Such compositions and formulations include formulations which dissolve or disperse aroma chemicals in liquid or solid compositions, to evenly disperse and/or retain their stability, so as to retain their aroma profile over extended periods of time; encompassed are also compositions that show a release of aroma chemicals over time, such as extended release or retarded release formulations.

Hence, another subject matter of the present invention is the use of the graft polymers of the invention and/or obtained by or obtainable by a process of the invention and/or as detailed before in fabric care and home care products, in cosmetic and personal care formulations, as crude oil emulsion breaker, in technical applications including in pigment dispersions for ink jet inks, in formulations for electro plating, in cementitious compositions, in agrochemical formulations as e.g. dispersants, crystal growth inhibitor and/or solubilizer, in lacquer and colorants formulations, preferably in agrochemical compositions and cleaning compositions and in fabric and home care products, in particular cleaning compositions for improved oily and fatty stain removal, removal of solid dirt such as clay, prevention of greying of fabric surfaces, and/or anti-scale agents and in particular for inhibiting the transfer of dyes, wherein the cleaning composition is preferably a laundry detergent formulation and/or a dish wash detergent formulation, more preferably a liquid laundry detergent formulation and/or a liquid manual dish wash detergent formulation.

Another subject-matter of the present invention is, therefore, also a cleaning composition, fabric care and home care product, industrial and institutional cleaning product, cosmetic or personal care product, oil field-formulation such as crude oil emulsion breaker or dispersants or gas hydrate inhibitors, pigment dispersion for e.g. ink jet inks and inks containing the graft polymer, electro plating product, cementitious composition, lacquer, paint, agrochemical formulations, preferably in laundry detergents, in cleaning compositions and/or in fabric and home care products, each comprising at least one graft polymer as defined above or obtained by or obtainable by a process of the invention and/or as detailed herein.

Hence, a preferred subject matter of the this invention is also the use of at least one inventive graft polymer and/or at least one graft polymer obtained or obtainable by the inventive process in fabric care and home care products, preferably in cleaning compositions and in laundry treatment, laundry care products and laundry washing products, more preferably a laundry detergent formulation, even more preferably a liquid laundry detergent formulation. In particular, the inventive graft polymer is employed in such composition/product/formulation for improved dye transfer inhibition.

Such inventive uses encompass the use of the graft polymer as detailed herein and/or as obtainable from or obtained form the inventive process, such graft polymer resembling that as detailed above describing the polymer structure in all of its embodiments, variations, and preferred, more preferred et. Embodiments, and including also the detailed embodiments as further described in the "Embodiment 1/2/3 etc." as listed at the end of the description herein below.

Another subject-matter of the present invention is, therefore, a cleaning composition, a fabric care and home care product, preferably a laundry cleaning composition, a laundry treatment product or laundry care product or laundry washing product, preferably a liquid laundry detergent formulation or liquid laundry detergent product, containing at least one graft polymer of the invention and/or at least one graft polymer obtained or obtainable by the inventive process, such composition or product exhibiting improved dye transfer inhibition.

Such inventive composition or product encompass at least one graft polymer as detailed herein and/or as obtainable from or obtained form the inventive process, such graft polymer resembling that as detailed above describing the polymer structure in all of its embodiments, variations, and preferred, more preferred et. Embodiments, and including also the detailed embodiments as further described in the "Embodiment 1/2/3 etc." as listed at the end of the description herein below.

In one embodiment it is also preferred that the cleaning composition, fabric care and home care product, preferably laundry cleaning composition, a laundry treatment product or laundry care product or laundry washing product, more preferably liquid laundry detergent formulation or liquid laundry detergent product, containing at least one graft polymer of the invention and/or at least one graft polymer obtained or obtainable by the inventive process, such composition or product preferably exhibiting improved dye transfer inhibition properties, additionally comprises at least one enzyme, preferably selected from one or more lipases, hydrolases, amylases, proteases, cellulases, mannanases, xylanases, DNases, dispersins, pectinases, oxidoreductases, hemicellulases, phospholipases, esterases, pectinases, cutinases, lactases and peroxidases, and combinations of at least two of the foregoing types, preferably at least one protease.

The phrase "fabric care composition" is meant to include compositions and formulations designed for treating fabric. Such compositions include but are not limited to, laundry cleaning compositions and detergents, fabric softening compositions, fabric enhancing compositions, fabric freshening compositions, laundry prewash, laundry pretreat, laundry additives, spray products, dry cleaning agent or composition, laundry rinse additive, wash additive, post-rinse fabric treatment, ironing aid, unit dose formulation, delayed delivery formulation, detergent contained on or in a porous substrate or nonwoven sheet, and other suitable forms that may be apparent to one skilled in the art in view of the teachings herein and detailed herein below when describing the compositions. Such compositions may be used as a pre-laundering treatment, a post- laundering treatment, or may be added during the rinse or wash cycle of the laundering operation, and as further detailed herein below when describing the use and application of the inventive graft polymers and compositions comprising such graft polymers.

At least one graft polymer as described herein and/or the at least one graft polymer obtained or obtainable by the inventive process as detailed before is present in said inventive compositions and products at a concentration of from about 0.05% to about 20%, preferably 0,05 to 10%, more preferably from about 0,1% to 8%, even more preferably from about 0.2% to about 6%, and further more preferably from about 0,2% to about 4%, and most preferably in amounts of up to 2%, each in weight % in relation to the total weight of such composition or product, and further including all ranges resulting from selecting any of the lower limits and any of the upper limits and all numbers in between those mentioned; such composition or product may - and preferably does - further comprise from about 1% to about 70% by weight of the composition or product of a surfactant system; said compositions and products to be used as dye transfer inhibitor and/or for inhibiting the transfer of dyes.

Even more preferably, the compositions or products of the present invention as detailed herein before comprising at least one inventive graft polymer as detailed before and/or at least one graft polymer obtained or obtainable by the inventive process as detailed before, and optionally further comprising at least one surfactant or a surfactant system in amounts from about 1% to about 70% by weight of the composition or product, are those for primary cleaning (i.e. removal of stains) within laundry applications, and may additionally comprise at least one enzyme, preferably selected from one or more lipases, hydrolases, amylases, proteases, cellulases, mannanases, xylanases, DNases, dispersins, pectinases, oxidoreductases, hemicellulases, phospholipases, esterases, pectinases, cutinases, lactases and peroxidases, and combinations of at least two of the foregoing types, preferably at least one protease.

In one preferred embodiment, the cleaning composition of the present invention is a liquid or solid laundry detergent composition, preferably a liquid laundry detergent composition.

In one embodiment, the inventive graft polymers may be utilized in cleaning compositions or products comprising a surfactant system comprising C10-C15 alkyl benzene sulfonates (LAS) as the primary surfactant and one or more additional surfactants selected from non-ionic, cationic, amphoteric, zwitterionic or other anionic surfactants, or mixtures thereof.

In a further embodiment, the inventive graft polymers may be utilized in the cleaning compositions or fabric and home care product, preferably a laundry cleaning composition, a laundry care product or laundry treatment product or laundry washing product, preferably a liquid laundry detergent formulation or liquid laundry detergent product, comprising C8-C18 linear or branched alkyl ethersulfates with 1-5 ethoxy-units as the primary surfactant and one or more additional surfactants selected from non-ionic, cationic, amphoteric, zwitterionic or other anionic surfactants, or mixtures thereof.

In a further embodiment the inventive graft polymers may be utilized in cleaning compositions or fabric and home care product, preferably a laundry cleaning composition, a laundry care product or laundry washing product, preferably a liquid laundry detergent formulation or liquid laundry detergent product, comprising C12-C18 alkyl ethoxylate surfactants with 5-10 ethoxy-units as the primary surfactant and one or more additional surfactants selected from anionic, cationic, amphoteric, zwitterionic or other non-ionic surfactants, or mixtures thereof.

In one embodiment of the present invention, the graft polymer is a component of a cleaning compositions or fabric and home care product, preferably a laundry cleaning composition, a laundry care product or laundry treatment product or laundry washing product, preferably a liquid laundry detergent formulation or liquid laundry detergent product, that each additionally comprise at least one surfactant, preferably at least one anionic surfactant.

In a further embodiment, this invention also encompasses a composition comprising a graft polymer and/or a polymer backbone each as descried herein before, further comprises an antimicrobial agent as disclosed hereinafter, preferably selected from the group consisting of 2-phenoxyethanol, more preferably comprising said antimicrobial agent in an amount ranging from 2ppm to 5% by weight of the composition; even more preferably comprising 0.1 to 2% of phenoxyethanol.

In a further embodiment, this invention also encompasses a method of preserving an aqueous composition against microbial contamination or growth, such composition comprising a graft polymer and/or a polymer backbone each as described herein before, such composition being preferably a detergent composition, such method comprising adding at least one antimicrobial agent selected from the disclosed antimicrobial agents as disclosed hereinafter, such antimicrobial agent preferably being 2-phenoxyethanol.

In a further embodiment, this invention also encompasses a composition, preferably a cleaning composition, more preferably a liquid laundry detergent composition or a liquid hand dish composition, even more preferably a liquid laundry detergent composition, or a liquid softener composition for use in laundry, such composition comprising a graft polymer and/or a polymer backbone each as described herein before, such composition further comprising 4,4'-dichoro 2-hydroxydiphenylether in a concentration from 0.001 to 3%, preferably 0.002 to 1%, more preferably 0.01 to 0.6%, each by weight of the composition.

In a further embodiment, this invention also encompasses a method of laundering fabric or of cleaning hard surfaces, which method comprises treating a fabric or a hard surface with a cleaning composition, more preferably a liquid laundry detergent composition or a liquid hand dish composition, even more preferably a liquid laundry detergent composition, or a liquid softener composition for use in laundry, such composition comprising a graft polymer and/or a polymer backbone each as described herein before, such composition further comprising 4,4'-dichoro 2-hydroxydiphenylether.

The selection of the additional surfactants in these embodiments may be dependent upon the application and the desired benefit.

### Description of cleaning compositions, formulations and their ingredients

The phrase "cleaning composition" as used herein includes compositions and formulations designed for cleaning soiled material. Such compositions and formulations include those designed for cleaning soiled material or surfaces of any kind.

Compositions for "industrial and institutional cleaning" includes such cleaning compositions being designed for use in industrial and institutional cleaning, such as those for use of cleaning soiled material or surfaces of any kind, such as hard surface cleaners for surfaces of any kind, including tiles, carpets, PVC-surfaces, wooden surfaces, metal surfaces, lacquered surfaces.

"Compositions for Fabric and Home Care" include cleaning compositions including but not limited to laundry cleaning compositions and detergents, fabric softening compositions, fabric enhancing compositions, fabric freshening compositions, laundry prewash, laundry pretreat, laundry additives, spray products, dry cleaning agent or composition, laundry rinse additive, wash additive, post-rinse fabric treatment, ironing aid, dish washing compositions, hard surface cleaning compositions, unit dose formulation, delayed delivery formulation, detergent contained on or in a porous substrate or nonwoven sheet, light duty liquid detergents compositions, heavy duty liquid detergent compositions, detergent gels commonly used for laundry, bleaching compositions, laundry additives, fabric enhancer compositions, and other suitable forms that may be apparent to one skilled in the art in view of the teachings herein. Such compositions may be used as a pre-laundering treatment, a post-laundering treatment, or may be added during the rinse or wash cycle of the laundering operation, preferably during the wash cycle of the laundering or dish washing operation. More preferably, such Composition for Fabric and Home Care is a laundry cleaning composition, a laundry care product or laundry washing product, most preferably a liquid laundry detergent formulation or liquid laundry detergent product.

The cleaning compositions of the invention may be in any form, namely, in the form of a "liquid" composition including liquid-containing composition types such as paste, gel, emulsion, foam and mousse; a solid composition such as powder, granules, micro-capsules, beads, noodles, pearlised balls, agglomerates, tablets, granular compositions, sheets, pastilles, beads, fibrous articles, bars, flakes; or a mixture thereof; ;types delivered in single-, udal- or multi-compartment pouches or containers; single-phase or multi-phase unit dose; a spray or foam detergent; premoistened wipes (i.e., the cleaning composition in combination with a nonwoven material such as that discussed in US 6,121,165, Mackey, et al.); dry wipes (i.e., the cleaning composition in combination with a nonwoven materials, such as that discussed in US 5,980,931, Fowler, et al.) activated with water by a user or consumer; and other homogeneous, non-homogeneous or single-phase or multiphase cleaning product forms.

The composition can be encapsulated in a single or multi-compartment pouch. A multi-compartment pouch may have at least two, at least three, or at least four compartments. A multi-compartmented pouch may include compartments that are side-by-side and/or superposed. The composition contained in the pouch or compartments thereof may be liquid, solid (such as powders), or combinations thereof. Non- limiting examples of "liquids"/"liquid compositions" include light duty and heavy duty liquid detergent compositions, fabric enhancers, detergent gels commonly used for laundry, bleach and laundry additives. Gases, e.g., suspended bubbles, or solids, e.g. particles, may be included within the liquids.

The liquid cleaning compositions of the present invention preferably have a viscosity of from 50 to 10000 mPa*s; liquid manual dish wash cleaning compositions (also liquid manual "dish wash compositions") have a viscosity of preferably from 100 to 10000 mPa*s, more preferably from 200 to 5000 mPa*s and most preferably from 500 to 3000 mPa*s at 20 1/s and 20 °C; liquid laundry cleaning compositions have a viscosity of preferably from 50 to 3000 mPa*s, more preferably from 100 to 1500 mPa*s and most preferably from 200 to 1000 mPa*s at 20 1/s and 20 °C.

The liquid cleaning compositions of the present invention may have any suitable pH-value. Preferably the pH of the composition is adjusted to between 4 and 14. More preferably the composition has a pH of from 6 to 13, even more preferably from 6 to 10, most preferably from 7 to 9. The pH of the composition can be adjusted using pH modifying ingredients known in the art and is measured as a 10% product concentration in demineralized water at 25 °C. For example, NaOH may be used and the actual weight% of NaOH may be varied and trimmed up to the desired pH such as pH 8.0. In one embodiment of the present invention, a pH >7 is adjusted by using amines, preferably alkanolamines, more preferably triethanolamine.

Cleaning compositions such as fabric and home care products and formulations for industrial and institutional cleaning, more specifically such as laundry and manual dish wash detergents, are known to a person skilled in the art. Any composition etc. known to a person skilled in the art, in connection with the respective use, can be employed within the context of the present invention by including at least one inventive polymer, preferably at least one polymer in amounts suitable for expressing a certain property within such a composition, especially when such a composition is used in its area of use.

One aspect of the present invention is also the use of the inventive polymers as additives for detergent formulations, particularly for liquid detergent formulations, preferably concentrated liquid detergent formulations, or single mono doses for laundry.

The cleaning compositions of the invention may - and preferably do - contain adjunct cleaning additives (also abbreviated herein as "adjuncts"), such adjuncts being preferably in addition to a surfactant system as defined before.

Suitable adjunct cleaning additives include builders, cobuilders, a surfactant system, fatty acids and/or salts thereof, structurants,thickeners and rheology modifiers, clay/soil removal/anti-redeposition agents, polymeric soil release agents, dispersants such as polymeric dispersing agents, polymeric grease cleaning agents, solubilizing agents, amphiphilic copolymers (including those that are free of vinyl pyrrolidone), chelating agents, enzymes, enzyme stabilizing systems, encapsulated benefit agents such as encapsulated perfume, bleaching compounds, bleaching agents, bleach activators, bleach catalysts, catalytic materials, brighteners, malodor control agents, pigments, dyes, opacifiers, pearlescent agents, hueing agents, dye transfer inhibiting agents, fabric softeners, carriers, suds boosters, suds suppressors (antifoams), color speckles, silver care, anti-tarnish and/or anti-corrosion agents, alkalinity sources, pH adjusters, pH-buffer agents, hydrotropes, scrubbing particles, antibacterial and antimicrobial agents, preservatives, anti-oxidants, softeners, carriers, fillers, solvents, processing aids, pro-perfumes, and perfumes.

The adjunct(s) may be present in the composition at levels suitable for the intended use of the composition. Typical usage levels range from as low as 0.001% by weight of composition for adjuncts such as optical brighteners to 50% by weight of composition for builders.

Liquid cleaning compositions additionally may comprise besides a surfactant system and graft polymer - and preferably do comprise at least one of - rheology control/modifying agents, emollients, humectants, skin rejuvenating actives, and solvents.

Solid compositions additionally may comprise - and preferably do comprise at least one of - fillers, bleaches, bleach activators and catalytic materials.

Suitable examples of such cleaning adjuncts and levels of use are found in WO 99/05242, U.S. Patent Nos. 5,576,282, 6,306,812 B1 and 6,326,348 B1.

Those of ordinary skill in the art will understand that a detersive surfactant encompasses any surfactant or mixture of surfactants that provide cleaning, stain removing, or laundering benefit to soiled material.

Hence, the cleaning compositions of the invention such as fabric and home care products, and formulations for industrial and institutional cleaning, more specifically such as laundry and manual dish wash detergents, preferably additionally comprise a surfactant system and, more preferably, also further adjuncts, as the one described above and below in more detail.

The surfactant system may be composed from one surfactant or from a combination of surfactants selected from anionic surfactants, non-ionic surfactants, cationic surfactants, zwitterionic surfactants, amphoteric surfactants, and mixtures thereof. Those of ordinary skill in the art will understand that a surfactant system for detergents encompasses any surfactant or mixture of surfactants that provide cleaning, stain removing, or laundering benefit to soiled material.

The cleaning compositions of the invention preferably comprise a surfactant system in an amount sufficient to provide desired cleaning properties. In some embodiments, the cleaning composition comprises, by weight of the composition, from about 1% to about 70% of a surfactant system. In other embodiments, the liquid cleaning composition comprises, by weight of the composition, from about 2% to about 60% of the surfactant system. In further embodiments, the cleaning composition comprises, by weight of the composition, from about 5% to about 30% of the surfactant system. The surfactant system may comprise a detersive surfactant selected from anionic surfactants, non-ionic surfactants, cationic surfactants, zwitterionic surfactants, amphoteric surfactants, and mixtures thereof.

### Laundry compositions

In laundry formulations, anionic surfactants contribute usually by far the largest share of surfactants within such formulation. Hence, preferably, the inventive cleaning compositions for use in laundry comprise at least one anionic surfactant and optionally further surfactants selected from any of the surfactants classes described herein, preferably from non-ionic surfactants and/or amphoteric surfactants and/or zwitterionic surfactants and/or cationic surfactants.

All of those specific ingredients typically to be used for such application are well-known, as referenced before in the various prior art documents cited, specifically those in the section of this disclosure mentioned before.

In one embodiment of the present invention, the laundry formulation or composition according to the invention comprises additionally at least one **enzyme.**

Useful enzymes are, for example, one or more hydrolases selected from lipases, amylases, proteases, cellulases, hemicellulases, phospholipases, esterases, pectinases, lactases and peroxidases, and combinations of at least two of the foregoing types.

In one embodiment, the composition according to the present invention comprises additionally at least one enzyme.

Preferably, the at least one enzyme is a detergent enzyme.

In one embodiment, the enzyme is classified as an oxidoreductase (EC 1), a transferase (EC 2), a hydrolase (EC 3), a lyase (EC 4), an isomerase (EC 5), or a ligase (EC 6). The EC-numbering is according to Enzyme Nomenclature, Recommendations (1992) of the Nomenclature Committee of the International Union of Biochemistry and Molecular Biology including its supplements published 1993-1999. Preferably, the enzyme is a hydrolase (EC 3).

In a preferred embodiment, the enzyme is selected from the group consisting of
proteases, amylases, lipases, cellulases, mannanases, hemicellulases, phospholipases, esterases, pectinases, lactases, peroxidases, xylanases, cutinases, pectate lyases, keratinases, reductases, oxidases, phenoloxidases, lipoxygenases, ligninases, pullulanases, tannases, pentosanases, malanases, beta-glucanases, arabinosidases, hyaluronidases, chondroitinases, laccases, nucleases, DNase, phosphodiesterases, phytases, carbohydrases, galactanases, xanthanases, xyloglucanases, oxidoreductase, perhydrolases, aminopeptidase, asparaginase, carbohydrase, carboxypeptidase, catalase, chitinase, cyclodextrin glycosyltransferase, alpha-galactosidase, beta-galactosidase, glucoamylase, alpha-glucosidase, beta-glucosidase, invertase, ribonuclease, transglutaminase, and dispersins, and combinations of at least two of the foregoing types. More preferably, the enzyme is selected from the group consisting of proteases, amylases, lipases, cellulases, mannanases, xylanases, DNases, dispersins, pectinases, oxidoreductases, and cutinases, and combinations of at least two of the foregoing types. Most preferably, the enzyme is a protease, preferably, a serine protease, more preferably, a subtilisin protease.

Preferably, the protease is a protease with at least 90% sequence identity to SEQ ID NO: 22 of EP1921147B1 and having the amino acid substitution R101E (according to BPN' numbering). Preferably, the amylase is an amylase with at least 90% sequence identity to SEQ ID NO: 54 of WO2021032881A1.

The composition of the present invention can comprise one type of enzyme or more than one enzyme of different types, e.g., an amylase and a protease, or more than one enzyme of the same type, e.g., two or more different proteases, or mixtures thereof, e.g., an amylase and two different proteases.

The enzyme(s) can be incorporated into the composition at levels sufficient to provide an effective amount for achieving a beneficial effect, preferably for primary washing effects and/or secondary washing effects, like anti-greying or antipilling effects (e.g., in case of cellulases). Preferably, the enzyme is present in the composition at levels from about 0.00001% to about 5%, preferably from about 0.00001% to about 2%, more preferably from about 0.0001% to about 1%, or even more preferably from about 0.001% to about 0.5% enzyme protein by weight of the composition.

Preferably, the enzyme-containing composition further comprises an enzyme stabilizing system.

Preferably, the enzyme-containing composition described herein comprises from about 0.001% to about 10%, from about 0.005% to about 8%, or from about 0.01% to about 6%, by weight of the composition, of an enzyme stabilizing system. The enzyme stabilizing system can be any stabilizing system which is compatible with the enzyme.

Preferably, the enzyme stabilizing system comprises at least one compound selected from the group consisting of polyols (preferably, 1,3-propanediol, ethylene glycol, glycerol, 1,2-propanediol, or sorbitol), inorganic salts (preferably, CaCl2, MgCl2, or NaCl), short chain (preferably, C1-C3) carboxylic acids or salts thereof (preferably, formic acid, formate (preferably, sodium formate), acetic acid, acetate, or lactate), borate, boric acid, boronic acids (preferably, 4-formyl phenylboronic acid (4-FPBA)), peptide aldehydes, peptide acetals, and peptide aldehyde hydrosulfite adducts. Preferably, the enzyme stabilizing system comprises a combination of at least two of the compounds selected from the group consisting of salts, polyols, and short chain carboxylic acids and preferably one or more of the compounds selected from the group consisting of borate, boric acid, boronic acids (preferably, 4-formyl phenylboronic acid (4-FPBA)), peptide aldehydes, peptide acetals, and peptide aldehyde hydrosulfite adducts. In particular, if proteases are present in the composition, protease inhibitors may be added, preferably selected from borate, boric acid, boronic acids (preferably, 4-FPBA), peptide aldehydes (preferably, peptide aldehydes like Z-VAL-H or Z-GAY-H), peptide acetals, and peptide aldehyde hydrosulfite adducts.

Formulations according to the invention can comprise one or more **corrosion inhibitors.** In the present case, this is to be understood as including those compounds which inhibit the corrosion of metal. Examples of suitable corrosion inhibitors are triazoles, in particular benzotriazoles, bisbenzotriazoles, aminotriazoles, alkylaminotriazoles, also phenol derivatives such as, for example, hydroquinone, pyrocatechol, hydroxyhydroquinone, gallic acid, phloroglucinol or pyrogallol. Of course, as corrosion inhibitors also corrosion inhibiting surfactants are known and thus may be employed instead or in addition, such as sodium N-lauryl-beta-iminodipropionate, disodium cocoamphodiacetate, sodium cocoamphoacetate.

In one embodiment of the present invention, formulations according to the invention comprise in total in the range from 0.1 to 1.5% by weight of corrosion inhibitor.

Laundry formulations comprising the inventive polymer may also comprise at least one **antimicrobial agent** (named also "preservative").

An antimicrobial agent is a chemical compound that kills microorganisms or inhibits their growth or reproduction. Microorganisms can be bacteria, yeasts or molds. A preservative is an antimicrobial agent which may be added to aqueous products and compositions to maintain the original performance, characteristics and integrity of the products and compositions by killing contaminating microorganisms or inhibiting their growth.

The composition/formulation may contain one or more antimicrobial agents and/or preservatives as listed in patent WO2021/115912 A1 ("Formulations comprising a hydrophobically modified polyethyleneimine and one or more enzymes") on pages 35 to 39.

Especially of interest for the cleaning compositions and fabric and home care products and specifically in the laundry formulations are any of the following antimicrobial agents and/or preservatives:
4,4'-dichloro 2-hydroxydiphenyl ether (further names: 5-chloro-2-(4-chlorophenoxy) phenol, Diclosan, DCPP), Tinosan^{®} HP 100 (30wt.% of DCPP in in 1,2-propylene glycol); 2-Phenoxyethanol (further names: Phenoxyethanol, Methylphenylglycol, Phenoxetol, ethylene glycol phenyl ether, Ethylene glycol monophenyl ether, 2-(phenoxy) ethanol, 2-phenoxy-1-ethanol); 2-bromo-2-nitropropane-1,3-diol (further names: 2-bromo-2-nitro-1,3-propanediol, Bronopol); Glutaraldehyde (further names: 1-5-pentandial, pentane-1,5-dial, glutaral, glutardialdehyde); Glyoxal (further names: ethandial, oxylaldehyde, 1,2-ethandial); 5-bromo-5-nitro-1,3-dioxane (further names: 5-bromo-5-nitro-m-dioxane, Bronidox ^{®});Phenoxypropanol (further names: propylene glycol phenyl ether, phenoxyisopropanol 1-phenoxy-2-propanol, 2-phenoxy-1-propanol); Glucoprotamine (chemical description: reaction product of glutamic acid and alkylpropylenediamine, further names: Glucoprotamine 50); Cyclohexyl hydroxyl diazenium-1-oxide, potassium salt (further names: N-cyclohexyl-diazenium dioxide, Potassium HDO, Xyligene,);Formic acid (further names: methanoic acid, Protectol^{®} FM, Protectol^{®} FM 75, Protectol^{®} FM 85, Protectol^{®} FM 99, Lutensol^{®} FM) and its salts, e.g. sodium formiate);Tetrahydro-3,5-dimethyl-1,3,5-thiadia-zine-2-thione (further names: 3,5-dimethyl-1,3-5-thiadiazinane-2-thione, Dazomet; 2,4-dichlorobenzyl alcohol (, further names: dichlorobenzyl alcohol, 2,4-dichloro-benzenemethanol, (2,4-dichloro-phenyl)-methanol, DCBA); 1-propanol (further names: n-propanol, propan-1-ol, n-propyl alcohol; 1,3,5-Tris-(2-hydroxyethyl)-hexahydro-1,3,5-triazin (further names: Hexyhydrotriazine, Tris(hydroethyl)-hexyhydrotriazin, hexyhydro-1,3-5-tris(2-hydroxyethyl)-s-triazine, 2,2',2"-(hexahydro-1,3,5-triazine-1,3,5- triyl)triethanol; 2-butyl-benzo[d]isothiazol-3-one ("BBIT"); 2-methyl-2H-isothiazol-3-one ("MIT‴′); 2-octyl-2H-isothiazol-3-one ("OIT"); 5-Chloro-2-methyl-2H-isothiazol-3-one ("CIT" or "CMIT"); Mixture of 5-chloro-2-methyl-2H- isothiazol-3-one ("CMIT") and 2-methyl-2H-isothiazol-3-one ("MIT") (Mixture of CMIT/MIT); 1,2-benzisothiazol-3(2H)-one ("BIT"); Hexa-2,4-dienoic acid (trivial name "sorbic acid") and its salts, e.g., calcium sorbate, sodium sorbate; potassium (E,E)-hexa-2,4-dienoate (Potassium Sorbate); Lactic acid and its salts; L-(+)-lactic acid; especially sodium lactate; Benzoic acid and salts of benzoic acid, e.g., sodium benzoate, ammonium benzo-ate, calcium benzoate, magnesium benzoate, MEA-benzoate, potassium benzoate; Salicylic acid and its salts, e.g., calcium salicylate, magnesium salicylate, MEA salicylate, sodium salicylate, potassium salicylate, TEA salicylate; Benzalkonium chloride, benzalkonium bromide, benzalkonium saccharinate; Didecyldimethylammonium chloride ("DDAC"); N-(3-aminopropyl)-N-dodecylpropane-1,3-diamine ("Diamine"); Peracetic acid; Hydrogen peroxide.

At least one antimicrobial agent or preservative may be added to the inventive composition in a concentration of 0.001 to 10% relative to the total weight of the composition.

Preferably, the composition contains 2-phenoxyethanol in a concentration of 0.1 to 2% or 4,4'-dichloro 2-hydroxydiphenyl ether (DCPP) in a concentration of 0.005 to 0.6%.

Further **optional ingredients** may be but are not limited to viscosity modifiers, cationic surfactants, foam boosting or foam reducing agents, perfumes, dyes, optical brighteners, and dye transfer inhibiting agents.

### General cleaning compositions and formulations

As the polymers of the invention are biodegradable, and especially the cleaning formulations typically have a pH of about 7 or higher, and additionally often contain also enzymes - which are included into such cleaning formulations to degrade biodegradable stuff such as grease, proteins, polysaccharides etc which are present in the stains and dirt which shall be removed by the cleaning compositions - some consideration is needed to be taken to formulate those bio-degradable polymers of the invention. Such formulations suitable are in principle known, and include the formulation in solids - where he enzymes and the polymers can be separated by coatings or adding them in separate particles which are mixed - and liquids and semi-liquids, where the polymers and the enzymes can be separated y formulating them in different compartiments, such as different compartiments of multi-chamber-pouches or bottles having different chambers, from which the liquids are poured out at the same time in a predefined amount to assure the application of the right amount per individual point of use of each component from each chamber. Such multi-compartment-pouches and bottles etc are known to a person of skill as well.

The liquid formulations disclosed in this chapter may comprise 0 to 2 % 2-phenoxyethanol, preferably about 1 %, in addition to all other mentioned ingredients.

The above and below disclosed liquid formulations may comprise 0-0,2% 4,4'-dichoro 2-hydroxydiphenylethe, preferably about 0,15 %, in addition to all other mentioned ingredients. The bleach-free solid laundry compositions may comprise 0-0,2% 4,4'-dichoro 2-hydroxydiphenylethe, preferably about 0,15 %, in addition to all other mentioned ingredients.

The formulations disclosed in this chapter may - in addition to all other mentioned ingredients - comprise one or more enzymes selected from those disclosed herein above, more preferably a protease and/or an amylase, wherein even more preferably the protease is a protease with at least 90% sequence identity to SEQ ID NO: 22 of EP1921147B1 and having the amino acid substitution R101E (according to BPN' numbering) and wherein the amylase is an amylase with at least 90% sequence identity to SEQ ID NO: 54 of WO2021032881A1, such enzyme(s) preferably being present in the formulations at levels from about 0.00001% to about 5%, preferably from about 0.00001% to about 2%, more preferably from about 0.0001% to about 1%, or even more preferably from about 0.001% to about 0.5% enzyme protein by weight of the composition.

The following compositions shown below including those in the tables disclose general cleaning compositions of certain types, which correspond to typical compositions correlating with typical washing conditions as typically employed in various regions and countries of the world. The at least one inventive polymer may be added to such formulation(s) in suitable amounts as outlined herein. When the shown composition does not comprise an inventive graft polymer, such composition is a comparative composition. When it comprises an inventive graft polymer, especially in the amounts that are described herein as preferred, more preferred etc ranges, such compositions are considered to fall within the scope of the present invention.

In a preferred embodiment the graft polymer according to the present invention is used in a laundry detergent.

Liquid laundry detergents according to the present invention are composed of:

| | |
|---|---|
| 0,05 - 10 % | of at least one inventive polymer |
| 1 - 50% | of surfactants |
| 0,1 - 40 % | of builders, cobuilders and/or chelating agents |
| 0,1 - 50 % | other adjuncts |
| water to add up 100 %. | |

Preferred liquid laundry detergents according to the present invention are composed of:

| | |
|---|---|
| 0,2 - 4 % | of at least one inventive polymer |
| 5 - 40 % | of anionic surfactants selected from C10-C15- LAS and C10-C18 alkyl ethersulfates containing 1-5 ethoxy-units |
| 1,5 - 10 % | of nonioic surfactants selected from C10-C18-alkyl ethoxylates containing 3 - 10 ethoxy-units |
| 2 - 20 % | of soluble organic builders/ cobuilders selected from C10-C18 fatty acids, di- and tricarboxylic acids, hydroxy-di- and hydroxytricaboxylic acids, aminopolycarboxylates and polycarboxylic acids |
| 0,05 - 5 % | of an enzyme system containing at least one enzyme suitable for detergent use and preferably also an enzyme stabilizing system |
| 0,5 - 20 % | of mono- or diols selected from ethanol, isopropanol, ethylenglycol, or propylenglyclol |
| 0,1 - 20 % | other adjuncts |
| water to add up to 100%. | |

Solid laundry detergents (like e.g. powders, granules or tablets) according to the present invention are composed of:

| | |
|---|---|
| 0,05 - 10 % | of at least one inventive polymer |
| 1 - 50% | of surfactants |
| 0,1 - 90 % | of builders, cobuilders and/or chelating agents |
| 0-50% | of fillers |
| 0 - 40% | of bleach actives |
| 0,1 - 30 % | of other adjuncts and/or water |
| wherein the sum of the ingredients adds up 100 %. | |

Preferred solid laundry detergents according to the present invention are composed of:

| | |
|---|---|
| 0,2 - 2 % | of at least one inventive polymer |
| 5 - 30 % | of anionic surfactants selected from C10-C15- LAS, C10-C18 alkylsulfates and C10-C18 alkyl ethersulfates containing 1-5 ethoxy-units |
| 1,5 - 7,5 % | of non-ionic surfactants selected from C10-C18-alkyl ethoxylates containing 3 - 10 ethoxy-units |
| 20 - 80 % | of inorganic builders and fillers selected from sodium carbonate, sodium bicarbonate, zeolites, soluble silicates, sodium sulfate |
| 0,5 - 15 % | of cobuilders selected from C10-C18 fatty acids, di- and tricarboxylic acids, hydroxydi- and hydroxytricarboxylic acids, aminopolycarboxylates and polycarboxylic acids |
| 0,1 - 5 % | of an enzyme system containing at least one enzyme suitable for detergent use and preferably also an enzyme stabilizing system |
| 0,5 - 30 % | of bleach actives |
| 0,1 - 20 % | other adjuncts |
| water to ad up to 100% | |

General formula for laundry detergent compositions according to the invention:

| Ingredient | Ranges of Ingredient in Liquid frame formulations |
|---|---|
| Linear alkyl benzene sulphonic acid | 0 to 30 % |
| Coco fatty acid | 1 to 12 % |
| Fatty alcohol ether sulphate | 0 to 25 % |
| NaOH or mono or triethanol amine | Up to pH 7,5 to 9,0 |
| Alcohol ethoxylate | 3 to 10 % |
| 1,2-Propylene glycol | 1 to 10 % |
| Ethanol | 0 to 4 % |
| Sodium citrate | 0 to 8 % |
| water | Up to 100 % |

Laundry powder frame formulations according to the invention:

| | Bleach free Powder | | | | | |
|---|---|---|---|---|---|---|
| Alcohol ethoxylate 7EO | 0.6 | 0 | 1 | 0 | 0 | 5.2 |
| Coco fatty acid K12-18 | 1.2 | 0 | 0 | 0 | 0 | 0 |
| Fatty alcohol ether sulphate | 1.5 | 0 | 0 | 0 | 0 | 6 |
| Linear alkyl benzene sulphonic acid | 12.1 | 11.2 | 13.6 | 21.9 | 18.7 | 12.7 |
| Bleach activator | 0 | 0 | 0 | 0 | 0 | 0 |
| Percarbonate | 0 | 0 | 0 | 0 | 0 | 0 |
| AcetateNa | 0 | 0 | 0 | 0.1 | 0 | 0.1 |
| CitrateNa | 0 | 0 | 0 | 0 | 0 | 14 |
| Na Silicate | 27.9 | 5.8 | 6.6 | 2 | 15 | 20.3 |
| Na Carbonate | 17.2 | 35 | 37.3 | 30.1 | 37 | 1 |
| Na Phosphate | 0 | 0 | 0 | 14 | 0.3 | 0 |
| Na Hydrogencarbonate | 0.7 | 0.9 | 0.5 | 2.7 | 0.4 | 10.5 |
| Zeolite4A | 4.2 | 0.1 | 5.1 | 10.2 | 1.8 | 11.6 |
| HEDP | 0 | 0 | 0 | 0 | 0 | 0.13 |
| MGDA | 0 | 1.1 | 0 | 0 | 0 | 0 |
| Cellulase | 0 - 0.5 | 0 - 0.5 | 0-0.5 | 0 - 0.5 | 0 - 0.5 | 0 - 0.5 |
| Lipase | 0 - 0.4 | 0 - 0.4 | 0 - 0.4 | 0 - 0.4 | 0 - 0.4 | 0 - 0.4 |
| Mannanase | 0 - 0.4 | 0 - 0.4 | 0 - 0.4 | 0 - 0.4 | 0 - 0.4 | 0 - 0.4 |
| Protease | 0-1.5 | 0 - 1.5 | 0 - 1.5 | 0 - 1.5 | 0 - 1.5 | 0 - 1.5 |
| Amylase | 0 - 0.5 | 0 - 0.5 | 0 - 0.5 | 0 - 0.5 | 0 - 0.5 | 0 - 0.5 |
| Na Sulfate | 30.8 | 1.3 | 33 | 11 | 22 | 3 |
| Na Chloride | 0.2 | 43 | 0.1 | 0 | 0.1 | 0.1 |
| optical brightener | 0.02 | 0 | | 0.1 | 0.06 | |
| Inventive Polymer(s) (total) | 0,2 - 4 | 0,2 - 4 | 0,2 - 4 | 0,2 - 4 | 0,2 - 4 | 0,2 - 4 |
| Other polymers | 0-6 | 0-6 | 0-6 | 0-6 | 0-6 | 0-6 |

Liquid laundry frame formulations according to the invention:

| **active** | | | | | | |
|---|---|---|---|---|---|---|
| **(numbers: % active)** | **F1** | **F2** | **F3** | **F4** | **F5** | **F6** |
| alcohol ethoxylat 7EO | 5.40 | 10.80 | 12.40 | 7.30 | 1.60 | 7.60 |
| Coco fatty acid K12-18 | 2.40 | 3.10 | 3.20 | 3.20 | 3.50 | 6.40 |
| Fatty alcohol ether sulphate | 5.40 | 8.80 | 7.10 | 7.10 | 5.40 | 14.00 |
| Linear alkyl benzene sulphonic acid | 5.50 | 0.00 | 14.50 | 15.50 | 10.70 | 0.00 |
| 1,2 Propandiol | 6.00 | 3.50 | 8.70 | 8.70 | 1.10 | 7.80 |
| Triethanolamine | 0 | 0 | 0 | 0 | 0 | 0 |
| Monoethanolamine | 0 | 0 | 4.00 | 4.30 | 0.30 | 0 |
| NaOH | 2.20 | 1.10 | 0 | 0 | 0 | 1.00 |
| Glycerol | 0 | 0.80 | 3.00 | 2.80 | 0 | 0 |
| Ethanol | 2.00 | 0 | 0 | 0 | 0.38 | 0.39 |
| Na citrate | 3.00 | 2.80 | 3.40 | 2.10 | 7.40 | 5.40 |
| **Inventive Polymer (s) (total)** | 0,2 - 4 | 0,2 - 4 | 0,2 - 4 | 0,2 - 4 | 0,2 - 4 | 0,2 - 4 |
| Other polymers | 0-6 | 0-6 | 0-6 | 0-6 | 0-6 | 0-6 |
| Protease | 0-1 | 0-1 | 0-1 | 0-1 | 0-1 | 0-1 |
| Amylase | 0 - 0,5 | 0 - 0,5 | 0 - 0,5 | 0 - 0,5 | 0 - 0,5 | 0-0,5 |
| Cellulase | 0 - 0,3 | 0 - 0,3 | 0 - 0,3 | 0 - 0,3 | 0 - 0,3 | 0-0,3 |
| Lipase | 0 - 0,2 | 0 - 0,2 | 0 - 0,2 | 0 - 0,2 | 0 - 0,2 | 0 - 0,2 |
| Mannanase | 0 - 0,2 | 0 - 0,2 | 0 - 0,2 | 0 - 0,2 | 0 - 0,2 | 0 - 0,2 |
| Pectat Lyase | 0 - 0,3 | 0 - 0,3 | 0 - 0,3 | 0 - 0,3 | 0 - 0,3 | 0-0,3 |
| water | **to 100** | **to 100** | **to 100** | **to 100** | **to 100** | **to 100** |

It is preferred, that within the respective laundry detergent, cleaning composition and/or fabric and home care product, the at least one graft polymer is present at a concentration of from about 0.05% to about 10%, preferably from about 0,1% to 8%, more preferably from about 0.2% to about 6%, and even more preferably from about 0.2% to about 4%, and most preferably in amounts of up to 2%, each in weight % in relation to the total weight of such composition or product, an all numbers in between, and including all ranges resulting from selecting any of the lower limits and combing with any of the upper limits.

The specific embodiments as described throughout this disclosure are encompassed by the present invention as part of this invention; the various further options being disclosed in this present specification as "optional", "preferred", "more preferred", "even more preferred" or "most preferred" options of a specific embodiment may be individually and independently (unless such independent selection is not possible by virtue of the nature of that feature or if such independent selection is explicitly excluded) selected and then combined within any of the other embodiments (where other such options and preferences can be also selected individually and independently), with each and any and all such possible combinations being included as part of this invention as individual embodiments.

### Chapter on most preferred embodiments

The following specific most preferred embodiments also form part of this invention, with all combinations being defined within individual embodiments and with all the combinations among them explicitly forming part of this present invention:
In a first most preferred embodiment, the graft polymer of the invention comprises:
(A) a polymer backbone as a graft base,
   wherein said polymer backbone (A) is obtainable by polymerization of at least one monomer selected from the group of C2- to C10-alkylene oxides, preferably C2 to C5-alkylene oxides, such as ethylene oxide, 1,2-propylene oxide, 1,2-butylene oxide, 2,3-butylene oxide, 1,2-pentene oxide or 2,3-pentene oxide, preferably at least one monomer being ethylene oxide, and more preferably the polymer backbone only being obtained from ethylene oxide,
   wherein in case of more than one alkylene oxide monomer being comprised the structure of the polymer backbone is a random polymer, a block polymer or a polymer comprising mixed structures of block units (with each block being a homo-block or a random block itself) and statistical /random parts comprised of two or more alkylene oxides,
   and
(B) polymeric sidechains grafted onto the polymer backbone (A), wherein said polymeric sidechains (B) are obtainable by co-polymerization of at least one monomer of (B1) and at least one monomer of (B2)
   with the monomers
   (B1) being at least one vinyl ester monomer,
      being preferably selected from vinyl acetate, vinyl propionate and vinyl laurate, more preferably from vinyl acetate and vinyl laurate, and most preferably vinyl acetate, and wherein the remaining amount of vinyl ester may be any other known vinyl ester, wherein preferably at least 80 weight percent, even more preferably at least 90 weight percent of the total weight of the monomers B1, and most preferably essentially only (i.e. about 100 wt.% or even 100 wt.%) vinyl acetate is employed as vinyl ester,
      and
   (B2) being
      (B2a) at least one olefinically unsaturated amine-containing monomer,
         being preferably 1-vinylimidazole or its derivatives such as alkyl-substituted derivatives of 1-vinylimidazole such as 2-methyl-1-vinylimidazole, more preferably 1-vinylimidazole,
         and
      (B2b) optionally at least one further nitrogen-containing monomer,
         being preferably a vinyllactame-monomer, being preferably selected from N-vinyllactams, such as N-vinylpyrrolidone, N-vinylpiperidone, N-vinylcaprolactam, more preferably N-vinylpyrrolidone, N-vinylcaprolactam, and most preferably N-vinylpyrrolidone.

In a further most preferred embodiment the graft polymer of the of the previous most preferred embodiment in this chapter comprises a polymer backbone (A) having a molecular weight as Mn in g/mol of within 500 to 12000, preferably not more than 9000, more preferably not more than 6000, even more preferably not more than 3500, further even more preferably not more than 3000, even further even more preferably not more than 2750, and at least 600, more preferably at least 1000, even more preferably at least 1500, and with all ranges being made up by combining any number detailed before for the lower border with any number detailed before as the upper border, specifically as more preferred range the Mn is from is from 600 to 3000, even more preferred from 1000 to 2750, and most preferred from 1500 to 2750, wherein the polymer backbone (A) is preferably obtainable by polymerization of ethylene oxide and i) at least one monomer selected from 1,2-propylene oxide and 1,2-butylene oxide, preferably only 1,2-propylene oxide, and/or ii) the relative amount of EO in the polymer backbone A is within 10 - 90 weight percent (in relation to the total molar amount of alkylene oxides in the polymer backbone (A)), or iii) no other monomer is comprised in the polymer backbone; and the amount of the polymer backbone (A) in weight percent being based on the total WEIGHT OF THE GRAFT POLYMER is from 30 to less than 89, preferably 40 to 80, more preferably 45 to 75, even more preferably 50 to 70, and most preferably 50 to 65; and the amount of polymeric side chains (B) in weight percent being based on the total WEIGHT OF THE GRAFT POLYMER is from more than 11 to 70, preferably 20 to 60, more preferably 25 to 55, even more preferably 30 to 50 and most preferably 35 to 50; and the amount of (B1) in weight percent based on the total WEIGHT OF THE GRAFT POLYMER is from 1 to 30, preferably 3 to 25, more preferably 5 to 20, most preferably 10 to 20; and the amount of **(B2)** in weight percent being based on the total WEIGHT OF THE GRAFT POLYMER is from more than 10 to 60, preferably of 20 to 60, more preferably 20 to 50, even more preferably 20 to 40, most preferably 25 to 35; and the amount of **(B2a)** in weight percent based on the total amount of monomers (B2) is from 10 to 100, preferably of more than 10 to 100, more preferably more than 15 to 90, more preferably 20 to 90, more preferably at least 15, even more preferably at least 20, even more preferably at least 25, even more preferably at least 30 and even more preferably at least 35, and most preferably at least 40, and as upper limit at most 85, even more preferably at most 80, even more preferably at most 75, and most preferably at most 70, such as more than 10 and up to 90, more preferably 20 to 85, even more preferably 25 to 80, even more preferably 30 to 80, even more preferably 35 to 75, and most preferably 40 to 70, with the proviso that the amount of **(B2a)** in weight percent based on the total WEIGHT OF THE GRAFT POLYMER is always at minimum more than 10, preferably at least 15, more preferably at least 17, even more preferably at least 20, and most preferably at least 25, and at most 60, more preferably at most 50, even more preferably at most 45, even more preferably at most 40, and most preferably at most 35; and the amount of (B2b) in weight percent is equal to [100 % of the amount of (B2)] minus [the amount of (B2a)].

In a further most preferred embodiment, the graft polymer of any of the previous most preferred embodiments and specifically any of the previous most preferred embodiments in this chapter has a polydispersity Mw/Mn of < 7, preferably < 5, more preferably < 4, and most preferably in the range from 1 to 3 (with Mw = weight average molecular weight and Mn = number average molecular weight [g/mol / g/mol]), and is based on a polymer backbone (A) i) being optionally capped at one or both end groups, preferably the polymer backbone (A) is not capped at both endgroups or, if the polymer backbone (A) is capped, the capping is done by C1-C25-alkyl groups, preferably C1 to C4-groups, ii) being a polymer comprising only EO and optionally PO, more preferably comprising only ethylene oxide, and/or iii) having a bio-degradability of at least 30, preferably at least 35, even more preferably at least 40 % such as 45, 50, 55, 60, 65, 70, 75, 80, 85 or even at least 90%, within 28 days when tested under OECD301F.

In a further most preferred embodiment, the graft polymer of any of the previous most preferred embodiments and specifically any of the previous most preferred embodiments in this chapter comprises a polymer backbone (A) having a molecular weight as Mn in g/mol of within 500 to 12000, preferably not more than 9000, more preferably not more than 6000, even more preferably not more than 3500, further even more preferably not more than 3000, even further even more preferably not more than 2750, and at least 600, more preferably at least 1000, even more preferably at least 1500, and with all ranges being made up by combining any number detailed before for the lower border with any number detailed before as the upper border, specifically as more preferred range the Mn is from is from 600 to 3000, even more preferred from 1000 to 2750, and most preferred from 1500 to 2750, wherein the polymer backbone (A) is preferably obtainable by polymerization of ethylene oxide and i) at least one monomer selected from 1,2-propylene oxide and 1,2-butylene oxide, preferably only 1,2-propylene oxide, and/or ii) the relative amount of EO in the polymer backbone A is within 10 - 90 weight percent (in relation to the total molar amount of alkylene oxides in the polymer backbone (A)), or iii) no other monomer is comprised in the polymer backbone, preferably the polymer backbone (A) consisting of only ethylene oxide as monomer; and the amount of the polymer backbone (A) in weight percent being based on the total WEIGHT OF THE GRAFT POLYMER is 40 to 70; and the amount of polymeric side chains (B) in weight percent being based on the total WEIGHT OF THE GRAFT POLYMER is 30 to 60; and the amount of (B1) in weight percent based on the total WEIGHT OF THE GRAFT POLYMER is 5 to 15; the amount of (B2) in weight percent being based on the total WEIGHT OF THE GRAFT POLYMER is 15 to 55; and the amount of (B2a) in weight percent based on the total WEIGHT OF THE GRAFT POLYMER is 15 to 35; and the amount of (B2b) in weight percent based on the total WEIGHT OF THE GRAFT POLYMER is equal to [100 % of the amount of (B2)] minus [the amount of (B2a)], wherein preferably the polymer backbone (A) is a polyalkylene oxide comprising more than 70, preferably more than 80, even more preferably more than 90 weight percent of ethylene oxide based on total alkylene oxide, and most preferably only ethylene oxide, and (B1) is vinyl acetate, (B2a) is vinylimidazole, and (B2b) is a vinyl lactame, preferably vinyl pyrrolidone.

In a further most preferred embodiment, the graft polymer comprises i) a polymer backbone (A) which is a polyalkylene oxide comprising more than 70, preferably more than 80, even more preferably more than 90 weight percent of ethylene oxide based on total alkylene oxide, and most preferably only ethylene oxide, and having a molecular weight as Mn in g/mol of within 500 to 12000, preferably not more than 9000, more preferably not more than 6000, even more preferably not more than 3500, further even more preferably not more than 3000, even further even more preferably not more than 2750, and at least 600, more preferably at least 1000, even more preferably at least 1500, and with all ranges being made up by combining any number detailed before for the lower border with any number detailed before as the upper border, specifically as more preferred range the Mn is from is from 600 to 3000, even more preferred from 1000 to 2750, and most preferred from 1500 to 2750, and the polymer backbone (A) being present in the graft polymer in amounts of 45 to 65 weight percent being based on the total WEIGHT OF THE GRAFT POLYMER ; and ii) polymeric side chains (B) in 40 to 55 weight percent being based on the total WEIGHT OF THE GRAFT POLYMER; wheren (B) comprises (B1) and (B2a) and optionally (B2b), with amount of (B1) being 5 to 15 weight percent based on the total WEIGHT OF THE GRAFT POLYMER; and amount of (B2) in weight percent being based on the total WEIGHT OF THE GRAFT POLYMER being 25 to 50; and the amount of (B2a) in weight percent based on the total WEIGHT OF THE GRAFT POLYMER being 15 to 30, preferably 20 to 30; and the amount of (B2b) in weight percent being equal to [100 % of the amount of (B2)] minus [the amount of (B2a)], wherein, (B1) is vinyl acetate, (B2a) is vinylimidazole, and (B2b) is a vinyl lactame, preferably vinyl pyrrolidone; and the graft polymer preferably having has a polydispersity Mw/Mn of < 7, preferably < 5, more preferably < 4, and most preferably in the range from 1 to 3 (with Mw = weight average molecular weight and Mn = number average molecular weight [g/mol / g/mol]); and more preferably in addition to all above features having a bio-degradability of at least 25, preferably at least 30, even more preferably at least 35, and most preferably at least 40 %, such as 45, 50, 55, 60, 65, 70, 75, 80, 85 or 90%, within 28 days when tested under OECD301F.

In a further most preferred embodiment, a process for obtaining a graft polymer as detailed in any of the embodiments detailed in this disclosure, and specifically any of the previous most preferred embodiments in this chapter, is encompassed which comprises polymerization of at least one monomer B1, at least one monomer B2a, optionally at least one monomer B2b, in the presence of at least one polymer backbone (A), wherein polymeric sidechains (B) are obtained by radical polymerization of the monomers B1, B2a and optional B2b by graft polymerization onto the polymer backbone (A), using radical forming compounds to initiate the radical polymerization.

In an even more preferred embodiment of the process as detailed herein including that of the preceding paragraph in this chapter, the process comprises the polymerization of at least one monomer (B1), at least one monomer (B2a), optionally at least one monomer (B2b) in the presence of at least one polymer backbone (A), a free radical-forming initiator (C) and, optionally but preferred, up to 50% by weight, based on the sum of components (A), (B1), (B2a), optional (B2b), and (C,), of at least one organic solvent (D), at a mean polymerization temperature at which the initiator (C) has a decomposition half-life of from 40 to 500 min, in such a way that the fraction of unconverted graft monomers (B1 and B2) and initiator (C) in the reaction mixture is constantly kept in a quantitative deficiency relative to the polymer backbone (A), to preferably obtain a graft polymer graft polymer comprising i) a polymer backbone (A) which is a polyalkylene oxide comprising more than 70, preferably more than 80, even more preferably more than 90 weight percent of ethylene oxide based on total alkylene oxide, and most preferably only ethylene oxide, and having a molecular weight as Mn in g/mol of within 500 to 12000, preferably not more than 9000, more preferably not more than 6000, even more preferably not more than 3500, further even more preferably not more than 3000, even further even more preferably not more than 2750, and at least 600, more preferably at least 1000, even more preferably at least 1500, and with all ranges being made up by combining any number detailed before for the lower border with any number detailed before as the upper border, specifically as more preferred range the Mn is from is from 600 to 3000, even more preferred from 1000 to 2750, and most preferred from 1500 to 2750, and the polymer backbone (A) being present in the graft polymer in amounts of 45 to 65 weight percent being based on the total WEIGHT OF THE GRAFT POLYMER ; and ii) polymeric side chains (B) in 40 to 55 weight percent being based on the total WEIGHT OF THE GRAFT POLYMER; wheren (B) comprises (B1) and (B2a) and optionally (B2b), with amount of (B1) being 5 to 15 weight percent based on the total WEIGHT OF THE GRAFT POLYMER; and amount of (B2) in weight percent being based on the total WEIGHT OF THE GRAFT POLYMER being 25 to 50; and the amount of (B2a) in weight percent based on the total WEIGHT OF THE GRAFT POLYMER being 15 to 30, preferably 20 to 30; and the amount of (B2b) in weight percent being equal to [100 % of the amount of (B2)] minus [the amount of (B2a)], wherein (B1) is preferably vinyl acetate, (B2a) is preferably vinylimidazole, and (B2b) is a vinyl lactame, preferably vinyl pyrrolidone; and the graft polymer preferably having has a polydispersity Mw/Mn of < 7, preferably < 5, more preferably < 4, and most preferably in the range from 1 to 3 (with Mw = weight average molecular weight and Mn = number average molecular weight [g/mol / g/mol]); and more preferably in addition to all above features having a bio-degradability of at least 25, preferably at least 30, even more preferably at least 35, and most preferably at least 40 %, such as 45, 50, 55, 60, 65, 70, 75, 80, 85 or 90%, within 28 days when tested under OECD301F.

In a further most preferred embodiment of the process as described herein before and specifically in any of the previous most preferred embodiments on such process, the process comprises at least one further process step selected from:
i) a post-polymerization process step that is performed after the main polymerization reaction, wherein preferably a further amount of initiator (optionally dissolved in the solvent(s)) is added over a period of 0,5 hour and up to 3 hours, preferably about 1 to 2 hours, more preferably about 1 hour, with the radical initiator and the solvent(s) for the initiator typically - and preferred - being the same as the ones for the main polymerization reaction;and wherein after the polymerization reaction and before the post-polymerisation reaction preferably a period is waited when the main polymerization reaction is left to proceed, before the post-polymerisation reaction is started by starting the addition of further radical initiator, such period being preferably from 10 minutes and up to 4 hours, preferably up to 2 hours, even more preferabl up to 1 hour, and most preferably up to 30 minutes; and wherein the temperature of the post-polymerisation process step is - preferably - the same as in the main polymerization reaction, or is increased, such increase being preferably higher by about 5 to 40°C, preferably 10 to 20°C compared to the temperature of the main polymerisaion reaction;
ii) a step of subjecting the graft polymer as obtained from the main polymerization or - if performed, the post-polymerisation process - to a means of concentration and/or drying to remove part of or almost all of the remaining solvent(s) (as far as they are removable due to their boiling points) and/or volatiles such as residual monomers, wherein
   a. the concentration is performed by removing part of the solvent(s) and optionally also volatiles to increase the solid polymer concentration, by preferably applying a distillation process such as thermal or vacuum distillation, preferably vacuum distillation, which is performed until the desired solid content is achieved, preferably is performed until the desired part or all of the volatile components such as volatile solvents and/or unreacted, volatile monomers, are removed;
   b. the drying is performed by subjecting the graft polymer containing at least residual amounts of volatiles such as remaining solvent and/or unreacted monomers etc. to a means of removing the volatiles, such as drying using a roller-drum, a spray-dryer, vacuum drying or freeze-drying, preferably - mainly for cost-reasons - spray-drying; and optionally combining such drying process step with a means of agglomeration or granulation to obtain agglomerated or granulated graft polymer particles, such process being preferably selected from spray-agglomeration, granulation or drying in a fluidized-bed dryer, spray-granulation device.

In a further most preferred embodiment, the graft polymer of or obtained by any of the previous most preferred embodiments in this chapter is used as component in a composition or product which is a fabric and home care product, a cleaning composition, an industrial and institutional cleaning product, a cosmetic or personal care product, an oil field-formulation such as crude oil emulsion breaker, a pigment dispersion for e.g. inks such as ink-jet inks, an electro plating product, a cementitious composition, a lacquer, a paint or an agrochemical formulations, preferably in compositions or products for fabric and home care, a cleaning composition, or an industrial and institutional cleaning product, more preferably in cleaning compositions, and most preferably a laundry detergent formulation, wherein such fabric and home care product, a cleaning composition, an industrial and institutional cleaning product preferably further comprising at least one enzyme, preferably selected from one or more lipases, hydrolases, amylases, proteases, cellulases, hemicellulases, phospholipases, esterases, pectinases, lactases and peroxidases, and combinations of at least two of the foregoing types.

In a further most preferred embodiment, the graft polymer of or obtained by any of the previous most preferred embodiments in this chapter is used as component in a composition or product which is a fabric and home care product, a cleaning composition, an industrial and institutional cleaning product, more preferably in cleaning compositions, and most preferably a laundry detergent formulation, preferably further comprising at least one enzyme, preferably selected from one or more lipases, hydrolases, amylases, proteases, cellulases, hemicellulases, phospholipases, esterases, pectinases, lactases and peroxidases, and combinations of at least two of the foregoing types, for inhibiting the transfer of dyes, wherein at least one graft polymer is present in such composition or product at a concentration of from 0.05% to about 20%, preferably 0,05 to 10%, more preferably from about 0,1% to 8%, even more preferably from about 0.2% to about 6%, and further more preferably from about 0,2% to about 4%, and most preferably in amounts of up to 2%, each in weight % in relation to the total weight of such composition or product, and all numbers in between, and including all ranges resulting from selecting any of the lower limits and combing with any of the upper limits, each percentage in weight % in relation to the total weight of such composition or product.

In a further most preferred embodiment, the graft polymer of or obtained by any of the previous most preferred embodiments in this chapter is used as component in a composition or product which is a fabric and home care product, a cleaning composition, an industrial and institutional cleaning product, more preferably in cleaning compositions, and most preferably a laundry detergent formulation, preferably further comprising at least one enzyme, preferably selected from one or more proteases, amylases, lipases, cellulases, mannanases, xylanases, DNases, dispersins, pectinases, oxidoreductases, and cutinases, and combinations of at least two of the foregoing types, for inhibiting the transfer of dyes, wherein at least one graft polymer is present in such composition or product at a concentration of from 0.05% to about 20%, preferably 0,05 to 10%, more preferably from about 0,1% to 8%, even more preferably from about 0.2% to about 6%, and further more preferably from about 0,2% to about 4%, and most preferably in amounts of up to 2%, each in weight % in relation to the total weight of such composition or product, and all numbers in between, and including all ranges resulting from selecting any of the lower limits and combing with any of the upper limits, each percentage in weight % in relation to the total weight of such composition or product.

In a further most preferred embodiment, the graft polymer as detailed in the preceding paragraph is used such product or composition which further comprises from about 1% to about 70% by weight of a surfactant system.

In a further most preferred embodiment, a laundry detergent, a cleaning composition or a fabric and home care product comprises at least one graft polymer as detailed in any of the previous most peferred embodiments in this chapter or obtained by a process as detailed in any such of the embodiments disclosed herein including specifically any of the previous most preferred embodiments in this chapter disclosing such process.

Within such laundry detergent, cleaning composition or fabric and home care product as detailed in any of the embodiments of this invention and specifically in the preceding paragraph, at least one graft polymer - as detailed in any such of the embodiments disclosed herein including specifically any of the previous most preferred embodiments disclosing such graft polymer ansd more specifically those in this chapter - is present at a concentration of from about 0.05% to about 10%, preferably from about 0.1% to 8%, more preferably from about 0.2% to about 6%, and even more preferably from about 0.2% to about 4%, and most preferably in amounts of up to 2%, each in weight % in relation to the total weight of such composition or product, an all numbers in between, and including all ranges resulting from selecting any of the lower limits and combing with any of the upper limits, each in weight % in relation to the total weight of such composition or product, and optionally further at least one enzyme, preferably selected from one or more lipases, hydrolases, amylases, proteases, cellulases, hemicellulases, phospholipases, esterases, pectinases, lactases and peroxidases, and combinations of at least two of the foregoing types, is comprised, and further optionally an antimicrobial agent selected from the group consisting of 2-phenoxyethanol; preferably comprising said antimicrobial agent in an amount ranging from 2 ppm to 5% by weight of the composition, more preferably comprising 0.1 to 2% of phenoxyethanol, is comprised, and optionally further 4,4'-dichoro 2-hydroxydiphenylether in a concentration from 0.001 to 3%, preferably 0.002 to 1%, more preferably 0.01 to 0.6%, each by weight of the composition is comprised, and further a surfactant system is comprised from about 1% to about 70% by weight of such detergent, composition or product.

In a further embodiment, this invention also encompasses a composition comprising a graft polymer and/or a polymer backbone each as descried herein before, further comprises an antimicrobial agent as disclosed hereinafter, preferably selected from the group consisting of 2-phenoxyethanol, more preferably comprising said antimicrobial agent in an amount ranging from 2ppm to 5% by weight of the composition; even more preferably comprising 0.1 to 2% of phenoxyethanol.

In a further embodiment, this invention also encompasses a method of preserving an aqueous composition against microbial contamination or growth, such composition comprising a graft polymer and/or a polymer backbone each as described herein before, such composition being preferably a detergent composition, such method comprising adding at least one antimicrobial agent selected from the disclosed antimicrobial agents as disclosed hereinafter, such antimicrobial agent preferably being 2-phenoxyethanol.

In a further embodiment, this invention also encompasses a composition, preferably a cleaning composition, more preferably a liquid laundry detergent composition or a liquid hand dish composition, even more preferably a liquid laundry detergent composition, or a liquid softener composition for use in laundry, such composition comprising a graft polymer and/or a polymer backbone each as described herein before, such composition further comprising 4,4'-dichoro 2-hydroxydiphenylether in a concentration from 0.001 to 3%, preferably 0.002 to 1%, more preferably 0.01 to 0.6%, each by weight of the composition.

In a further embodiment, this invention also encompasses a method of laundering fabric or of cleaning hard surfaces, which method comprises treating a fabric or a hard surface with a cleaning composition, more preferably a liquid laundry detergent composition or a liquid hand dish composition, even more preferably a liquid laundry detergent composition, or a liquid softener composition for use in laundry, such composition comprising a graft polymer and/or a polymer backbone each as described herein before, such composition further comprising 4,4'-dichoro 2-hydroxydiphenylether.

### Polymer measurements

K-value measures the relative viscosity of dilute polymer solutions and is a relative measure of the weight average molecular weight. As the weight average molecular weight of the polymer increases for a particular polymer, the K-value tends to also increase. The K--value is determined in a 3% by weight NaCl solution at 23°C and a polymer concentration of 1% polymer according to the method of H. Fikentscher in "Cellulosechemie", 1932, 13, 58.

The number average molecular weight (Mₙ), the weight average molecular weight (M_{w}) and the polydispersity M_{w}/Mₙ of the inventive graft polymers were determined by gel permeation chromatography in tetrahydrofuran. The mobile phase (eluent) used was tetrahydrofuran comprising 0.035 mol/L diethanolamine. The concentration of graft polymer in tetrahydrofuran was 2.0 mg per mL. After filtration (pore size 0.2 µm), 100 µL of this solution were injected into the GPC system. Four different columns (heated to 60°C) were used for separation (SDV precolumn, SDV 1000A, SDV 100000A, SDV 1000000A). The GPC system was operated at a flow rate of 1 mL per min. A DRI Agilent 1100 was used as the detection system. Poly(ethylene glycol) (PEG) standards (PL) having a molecular weight Mₙ from 106 to 1 378 000 g/mol were used for the calibration.

### Method for measuring polymer biodegradability

Biodegradation in wastewater was tested in triplicate using the OECD 301F manometric respirometry method. 30 mg/mL test substance is inoculated into wastewater taken from Mannheim Wastewater Treatment Plant and incubated in a closed flask at 25°C for 28 days. The consumption of oxygen during this time is measured as the change in pressure inside the flask using an OxiTop C (WTW). Evolved CO2 is absorbed using an NaOH solution. The amount of oxygen consumed by the microbial population during biodegradation of the test substance, after correction using a blank, is expressed as a % of the ThOD (Theoretical Oxygen Demand).

### Synthesis Procedures for comparative examples:

Comp. Ex. I: Copolymer of N-vinylpyrrolidone and 1-N-vinylimidazole, weight ratio 1:1; K-value approximately 30; obtainable as e.g. Sokalan HP 56 from BASF.
Comp. Ex. II: Graft polymerization of vinyl acetate (30 wt.-%) and vinyl pyrrolidone (20 wt.-%) on PEG (Mₙ 6000 g/mol; 50 wt.-%)

Experimental procedure was performed according to US 2019/0390142 A1 Example 1K.
Comp. Ex. III: "Graft" polymerization of vinyl imidazole (40 wt.-%) and vinyl pyrrolidone (40 wt.-%) in the presence of PEG (Mₙ 600 g/mol; 20 wt.-%)

Experimental procedure was performed according to Example 6 in WO 03/042264 A2.

### Comparative Ex.IV: (Graft polymerization with a process according to the invention but too low amount of B2a and too low amount of B2)

### Graft polymerization of vinyl acetate (20 wt.%), vinyl imidazole (2 wt.%) and vinyl pyrrolidone (13 wt.%) on EO/PO backbone (MW 1950 g/mol; 50% EO; 65 wt%)

A polymerization vessel equipped with stirrer and reflux condenser was initially charged with 435.5 g of EO/PO block copolymer under nitrogen atmosphere and heated to 90°C.

Feed 1 containing 8.20 g of tert-butyl peroxy-2-ethylhexanoate, dissolved in 33.70 g of tripropylene glycol, was dosed to the stirred vessel in 6:10 h, at 90°C. 5.56% of Feed 1 were dosed in the first 10 min and the rest was dosed with constant feed rate for 6:00 h. 10 min after the start of Feed 1, Feed 2 (134 g of vinyl acetate), Feed 3 (13.40 g of vinyl imidazole), and Feed 4 (87.10 g of vinyl pyrrolidone), were started and dosed to the reaction vessel within 6:00 h at constant feed rate and 90°C. Upon completion of the feeds, Feed 5 consisting of 3.21 g of tert-butyl peroxy-2-ethylhexanoate, dissolved in 13.20 g of tripropylene glycol, were dosed within 56 min with constant flow rate at 90°C. The mixture was stirred for one hour at 90°C upon complete addition of the feed.

Residual amounts of monomer were removed by vacuum distillation for 1 h at 95°C and 500 mbar.

### Synthesis procedures for inventive examples Ex.1 - Ex.9

### Example 1: graft polymerization of vinyl acetate (10 wt.%), vinyl imidazole (25 wt.%) and vinyl pyrrolidone (15 wt.%) on EO/PO backbone (MW 2650 g/mol; 40% EO; 50 wt%)

A polymerization vessel equipped with stirrer and reflux condenser was initially charged with 376 g of EO/PO block copolymer under nitrogen atmosphere and heated to 90°C.

Feed 1 containing 5.45 g of tert-butyl peroxy-2-ethylhexanoate, dissolved in 25.52 g of tripropylene glycole, was dosed to the stirred vessel in 6:10 h, at 90°C. 5.56% of Feed 1 were dosed in the first 10 min and the rest was dosed with constant feed rate for 6:00 h. 10 min after the start of Feed 1, Feed 2 (75.2 g of vinyl acetate), Feed 3 (188 g of vinyl imidazole), and Feed 4 (112.8 g of vinyl pyrrolidone), were started and dosed to the reaction vessel within 6:00 h at constant feed rate and 90°C. Upon completion of the feeds, Feed 5 consisting of 3.61 g of tert-butyl peroxy-2-ethylhexanoate, dissolved in 16.89 g of tripropylene glycol, were dosed within 56 min with constant flow rate at 90°C. The mixture was stirred for one hour at 90°C upon complete addition of the feed.

Residual amounts of monomer were removed by vacuum distillation for 1 h at 95°C and 500 mbar.

### Example 2: graft polymerization of vinyl acetate (10 wt.%), vinyl imidazole (25 wt.%) and vinyl pyrrolidone (15 wt.%) on EO/PO backbone (MW 2900 g/mol; 40% EO; 50 wt%)

A polymerization vessel equipped with stirrer and reflux condenser was initially charged with 550 g of EO/PO block copolymer under nitrogen atmosphere and heated to 90°C.

Feed 1 containing 7.97 g of tert-butyl peroxy-2-ethylhexanoate, dissolved in 37.33 g of 1,2-propanediol, was dosed to the stirred vessel in 6:10 h, at 90°C. 5.56% of Feed 1 were dosed in the first 10 min and the rest was dosed with constant feed rate for 6:00 h. 10 min after the start of Feed 1, Feed 2 (110 g of vinyl acetate), Feed 3 (275 g of vinyl imidazole), and Feed 4 (165 g of vinyl pyrrolidone), were started and dosed to the reaction vessel within 6:00 h at constant feed rate and 90°C. Upon completion of the feeds, Feed 5 consisting of 5.28 g of tert-butyl peroxy-2-ethylhexanoate, dissolved in 24.70 g of 1,2-propanediol, were dosed within 56 min with constant flow rate at 90°C. The mixture was stirred for one hour at 90°C upon complete addition of the feed.

Residual amounts of monomer were removed by vacuum distillation for 1 h at 95°C and 500 mbar.

### Example 3: graft polymerization of vinyl acetate (10 wt.%), vinyl imidazole (25 wt.%) and vinyl pyrrolidone (15 wt.%) on EO/PO backbone (MW 1750 g/mol; 30% EO; 50 wt%)

A polymerization vessel equipped with stirrer and reflux condenser was initially charged with 430 g of EO/PO block copolymer under nitrogen atmosphere and heated to 90°C.

Feed 1 containing 6.23 g of tert-butyl peroxy-2-ethylhexanoate, dissolved in 29.19 g of tripropylene glycol, was dosed to the stirred vessel in 6:10 h, at 90°C. 5.56% of Feed 1 were dosed in the first 10 min and the rest was dosed with constant feed rate for 6:00 h. 10 min after the start of Feed 1, Feed 2 (86 g of vinyl acetate), Feed 3 (215 g of vinyl imidazole), and Feed 4 (129 g of vinyl pyrrolidone), were started and dosed to the reaction vessel within 6:00 h at constant feed rate and 90°C. Upon completion of the feeds, Feed 5 consisting of 4.12 g of tert-butyl peroxy-2-ethylhexanoate, dissolved in 19.32 g of tripropylene glycol, were dosed within 56 min with constant flow rate at 90°C. The mixture was stirred for one hour at 90°C upon complete addition of the feed.

Residual amounts of monomer were removed by vacuum distillation for 1 h at 95°C and 500 mbar.

### Example 4: graft polymerization of vinyl acetate (10 wt.%), vinyl imidazole (25 wt.%) and vinyl pyrrolidone (15 wt.%) on EO/PO backbone (MW 2450 g/mol; 20% EO; 50 wt%)

A polymerization vessel equipped with stirrer and reflux condenser was initially charged with 500 g of EO/PO block copolymer under nitrogen atmosphere and heated to 90°C.

Feed 1 containing 7.24 g of tert-butyl peroxy-2-ethylhexanoate, dissolved in 33.94 g of tripropylene glycol, was dosed to the stirred vessel in 6:10 h, at 90°C. 5.56% of Feed 1 were dosed in the first 10 min and the rest was dosed with constant feed rate for 6:00 h. 10 min after the start of Feed 1, Feed 2 (100 g of vinyl acetate), Feed 3 (250 g of vinyl imidazole), and Feed 4 (150 g of vinyl pyrrolidone), were started and dosed to the reaction vessel within 6:00 h at constant feed rate and 90°C. Upon completion of the feeds, Feed 5 consisting of 4.80 g of tert-butyl peroxy-2-ethylhexanoate, dissolved in 22.46 g of tripropylene glycol, were dosed within 56 min with constant flow rate at 90°C. The mixture was stirred for one hour at 90°C upon complete addition of the feed.

Residual amounts of monomer were removed by vacuum distillation for 1 h at 95°C and 500 mbar.

### Example 5: graft polymerization of vinyl acetate (10 wt.%), vinyl imidazole (25 wt.%) and vinyl pyrrolidone (15 wt.%) on PEG backbone (MW 1500 g/mol; 100% EO; 50 wt%)

A polymerization vessel equipped with stirrer and reflux condenser was initially charged with 250 g of PEG backbone under nitrogen atmosphere and heated to 90°C.

Feed 1 containing 3.62 g of tert-butyl peroxy-2-ethylhexanoate, dissolved in 33.75 g of tripropylene glycol, was dosed to the stirred vessel in 6:10 h, at 90°C. 5.56% of Feed 1 were dosed in the first 10 min and the rest was dosed with constant feed rate for 6:00 h. 10 min after the start of Feed 1, Feed 2 (50 g of vinyl acetate), Feed 3 (125 g of vinyl imidazole), and Feed 4 (75 g of vinyl pyrrolidone), were started and dosed to the reaction vessel within 6:00 h at constant feed rate and 90°C. Upon completion of the feeds, Feed 5 consisting of 2.40 g of tert-butyl peroxy-2-ethylhexanoate, dissolved in 22.35 g of tripropylene glycol, were dosed within 56 min with constant flow rate at 90°C. The mixture was stirred for one hour at 90°C upon complete addition of the feed.

Residual amounts of monomer were removed by vacuum distillation for 1 h at 95°C and 500 mbar.

### Example 6: graft polymerization of vinyl acetate (5 wt.%), vinyl imidazole (20 wt.%) and vinyl pyrrolidone (20 wt.%) on PEG backbone (MW 4000 g/mol; 100% EO; 55 wt%)

A polymerization vessel equipped with stirrer and reflux condenser was initially charged with 341 g of PEG backbone under nitrogen atmosphere and heated to 90°C.

Feed 1 containing 4.49 g of tert-butyl peroxy-2-ethylhexanoate, dissolved in 21.02 g of tripropylene glycol, was dosed to the stirred vessel in 6:10 h, at 90°C. 5.56% of Feed 1 were dosed in the first 10 min and the rest was dosed with constant feed rate for 6:00 h. 10 min after the start of Feed 1, Feed 2 (31 g of vinyl acetate), Feed 3 (124 g of vinyl imidazole), and Feed 4 (124 g of vinyl pyrrolidone), were started and dosed to the reaction vessel within 6:00 h at constant feed rate and 90°C. Upon completion of the feeds, Feed 5 consisting of 2.97 g of tert-butyl peroxy-2-ethylhexanoate, dissolved in 13.91 g of tripropylene glycol, were dosed within 56 min with constant flow rate at 90°C. The mixture was stirred for one hour at 90°C upon complete addition of the feed.

Residual amounts of monomer were removed by vacuum distillation for 1 h at 95°C and 500 mbar.

### Example 7: graft polymerization of vinyl acetate (15 wt.%), vinyl imidazole (13 wt.%) and vinyl pyrrolidone (7 wt.%) on EO/PO backbone (MW 2650 g/mol; 40% EO; 65 wt%)

A polymerization vessel equipped with stirrer and reflux condenser was initially charged with 435.5 g of EO/PO block copolymer under nitrogen atmosphere and heated to 90°C.

Feed 1 containing 8.20 g of tert-butyl peroxy-2-ethylhexanoate, dissolved in 33.70 g of tripropylene glycol, was dosed to the stirred vessel in 6:10 h, at 90°C. 5.56% of Feed 1 were dosed in the first 10 min and the rest was dosed with constant feed rate for 6:00 h. 10 min after the start of Feed 1, Feed 2 (100.50 g of vinyl acetate), Feed 3 (87.10 g of vinyl imidazole), and Feed 4 (46.90 g of vinyl pyrrolidone), were started and dosed to the reaction vessel within 6:00 h at constant feed rate and 90°C. Upon completion of the feeds, Feed 5 consisting of 3.21 g of tert-butyl peroxy-2-ethylhexanoate, dissolved in 13.20 g of tripropylene glycol, were dosed within 56 min with constant flow rate at 90°C. The mixture was stirred for one hour at 90°C upon complete addition of the feed.

Residual amounts of monomer were removed by vacuum distillation for 1 h at 95°C and 500 mbar.

### Example 8: graft polymerization of vinyl acetate (10 wt.%), vinyl imidazole (15 wt.%) and vinyl pyrrolidone (15 wt.%) on PEG backbone (MW 1500 g/mol; 100% EO; 60 wt%)

A polymerization vessel equipped with stirrer and reflux condenser was initially charged with 390 g of PEG backbone under nitrogen atmosphere and heated to 90°C.

Feed 1 containing 7.96 g of tert-butyl peroxy-2-ethylhexanoate, dissolved in 32.12 g of tripropylene glycol, was dosed to the stirred vessel in 6:10 h, at 90°C. 5.56% of Feed 1 were dosed in the first 10 min and the rest was dosed with constant feed rate for 6:00 h. 10 min after the start of Feed 1, Feed 2 (65 g of vinyl acetate), Feed 3 (97.5 g of vinyl imidazole), and Feed 4 (97.5 g of vinyl pyrrolidone), were started and dosed to the reaction vessel within 6:00 h at constant feed rate and 90°C. Upon completion of the feeds, Feed 5 consisting of 3.32 g of tert-butyl peroxy-2-ethylhexanoate, dissolved in 13.39 g of tripropylene glycol, were dosed within 56 min with constant flow rate at 90°C. The mixture was stirred for one hour at 90°C upon complete addition of the feed.

Residual amounts of monomer were removed by vacuum distillation for 1 h at 95°C and 500 mbar.

### Example 9: graft polymerization of vinyl acetate (5 wt.%), vinyl imidazole (15 wt.%) and vinyl pyrrolidone (15 wt.%) on PEG backbone (MW 1500 g/mol; 100% EO; 65 wt%)

A polymerization vessel equipped with stirrer and reflux condenser was initially charged with 402 g of PEG backbone under nitrogen atmosphere and heated to 90°C.

Feed 1 containing 8.20 g of tert-butyl peroxy-2-ethylhexanoate, dissolved in 33.70 g of tripropylene glycol, was dosed to the stirred vessel in 6:10 h, at 90°C. 5.56% of Feed 1 were dosed in the first 10 min and the rest was dosed with constant feed rate for 6:00 h. 10 min after the start of Feed 1, Feed 2 (67 g of vinyl acetate), Feed 3 (100.5 g of vinyl imidazole), and Feed 4 (100.5 g of vinyl pyrrolidone), were started and dosed to the reaction vessel within 6:00 h at constant feed rate and 90°C. Upon completion of the feeds, Feed 5 consisting of 3.21 g of tert-butyl peroxy-2-ethylhexanoate, dissolved in 13.20 g of tripropylene glycol, were dosed within 56 min with constant flow rate at 90°C. The mixture was stirred for one hour at 90°C upon complete addition of the feed.

Residual amounts of monomer were removed by vacuum distillation for 1 h at 95°C and 500 mbar.

For the inventive examples Ex.1 - Ex.11, commercially available EO/PO polyether products and PEG polyethers were used as backbone materials. These products are available for example from BASF under the tradenames Pluriol^{®} or Pluronic^{®}.

Structure details of more comparative and inventive polymer examples are listed in **Table 1 and 2.**

The biodegradation data of comparative and inventive polymers at 28 day of the OECD 301F test is summerized in **Tables 1 and 2.**

The data shows inter alia that the total amount of B2 is relevant for the performance on red colour, whereas for the performance on blue colour the amount of B2a is the relevant parameter: the more B2, the better the performance on red, and the more B2a, the better the performance on blue.

**Table 1:**

| Example | Polymer Backbone Mₙ [g/mol] | Polymer Backbone %EO | Polymer Backbone Structure | Sidechain Monomers(B) | Weight Ratio of Polymer Backbone to Sidechain Monomers (A):(B1):(B2a):(B2b) | Biodegradation [%], 28d |
|---|---|---|---|---|---|---|
| ***Comp. Ex. I*** | - | - | - | VI / VP | 0:0:50:50 | < 5 |
| ***Comp. Ex**. **II*** | 6000 | VAc | C | VAc / VP | 50:20:0:30 | 15 |
| **Comp. Ex. III** | 600 | 100 | C | VP | 15:0:30:55 | 12 |
| **Comp. Ex. IV** | 1950 | 50 | A2 | VAc/ VI / VP | 65:20:2:13 | 35 |

**Table 2**

| Example | Polymer Backbone Mₙ [g/mol] | Polymer Backbone %EO | Polymer Backbone Structure | Sidechain Monomers(B) | Weight Ratio of Polymer Backbone to Sidechain Monomers (A):(B1):(B2a):(B2b) | Biodegradation [%], 28d |
|---|---|---|---|---|---|---|
| **Ex. 1** | 2650 | 40 | A2 | VAc/VI/VP | 50:10:25:15 | 30 |
| **Ex. 2** | 2900 | 40 | A1 | VAc/VI/VP | 50:10:25:15 | 49 |
| **Ex. 3** | 1750 | 30 | A1 | VAc/VI/VP | 50:10:25:15 | 33 |
| **Ex. 4** | 2450 | 20 | A2 | VAc/VI/VP | 50:10:25:15 | 27 |
| **Ex. 5** | 1500 | 100 | C | VAc / VI / VP | 50:10:25:15 | 35 |
| **Ex. 6** | 4000 | 100 | C | VAc / VI / VP | 55:5:20:20 | 27 |
| **Ex. 7** | 2650 | 40 | A2 | VAc/ VI / VP | 65:15:13:7 | 36 |
| **Ex. 8** | 1500 | 100 | C | VAc / VI / VP | 60:10:15:15 | 43 |
| **Ex. 9** | 1500 | 100 | C | VAc / VI / VP | 65:5:15:15 | 42 |

| | | | | | | |
|---|---|---|---|---|---|---|
| VAc = Vinyl acetate; VI = Vinyl imidazole; VP = Vinyl pyrrolidone; A1: EO/PO/EO triblock backbone; A2: PO/EO/PO triblock backbone; C: PEG; | | | | | | |

### Evaluation of DTI performance (laundry experiments)

### Wash results:

Selected color fabric (EMPA 130 and EMPA 133 as dye donor) was washed at 60° C in the presence of white test fabric and polyester ballast fabric with addition of the dye transfer inhibitor. The liquid detergent based upon a mixture of anionic and noninonic surfactants (LAS; AES, AEO). After the wash cycle, the fabric was rinsed, spun and dried. In order to determine the dye transfer inhibiting effect, the staining of the white test fabric was ascertained photometrically. The reflectance was determined with a Datacolor photometer (Elrepho 2000) at 540 nm (EMPA 130) or at 600 nm (EMPA 133).

### Composition of the liquid detergent

| **Ingredient** | **[% by weight]** |
|---|---|
| Linear dodecylbenzenesulfonic acid | 5,5 |
| C12C14 fatty alcohol ether sulfate, Na salt | 5,4 |
| C13C15 oxo process alcohol with 7 EO | 5,4 |
| Coconut fatty acid K 12-18 | 2,4 |
| 1,2 propylene glycol | 6,0 |
| Ethanol | 2,0 |
| NaOH | 2,2 |
| Sodium citrate | 3,0 |
| DTI additive | 0,5 / 1,0 active material |
| Water | to 100 |

### Wash conditions

| | |
|---|---|
| Machine | Launder-o-meter, LP2 type, SDL Atlas Inc., USA |
| Detergent dosage | 1,7 g/L |
| Wash liquor | 250 ml water |
| Water hardness | Ca²⁺ : Mg²⁺ : HCO3⁻ 4:1:8 |
| Wash cycle | 1 |
| Fabric/liquor ratio | 1 : 12,5 |
| Wash duration | 20 min |
| Wash temperature | 60 °C |
| Color fabric | 1 g EMPA 130 |
| | 1 g EMPA 133 |
| Test fabric | 10 g wfk 10 A |
| | 5 g wfl 20 A |
| Ballast fabric | 5 g wfk 30 A, polyester fabric |

Explanation of abbreviations in previous table:
wfk 10 A: cotton fabric, reflectance 83.9 (540 nm), 84.5 (600 nm)
wfk 20 A: polyester-cotton fabric, reflectance 83.8% (540 nm), 83.9 (600 nm)
EMPA 130: cotton fabric dyed with Direct Red 83.1
EMPA 133: cotton fabric dyed with Direct Blue71

Manufacturer/supplier: wfk Testgewebe GmbH, Bruggen, Germany; EMPA Testmaterialien AG, Sankt Gallen, Switzerland

Wash result for EMPA 130 color fabric (red colour) (evaluation of % reflectance)

| | Dosage DTI (two examples per DTI-polymer) | % reflectance wfk 10 A | % reflectance wfk 20 A |
|---|---|---|---|
| No DTI | | 66,0 | 68,9 |
| Comp. Ex I | 0,5 wt.% 1,0 wt.% | 82,7 82,9 | 82,2 82,2 |
| Comp. Ex. II | 0,5 wt.% | 66,2 | 69,2 |
| | 1,0 wt.% | 66,3 | 69,4 |
| Comp. Ex. III | 0,5 wt.% | 81,5 | 81,7 |
| | 1,0 wt.% | 82,4 | 82,0 |
| Ex. 1 | 0,5 wt.% | 82,0 | 78,8 |
| | 1,0 wt.% | 82,3 | 79,7 |
| Ex. 2 | 0,5 wt.% | 80,7 | 80,1 |
| | 1,0 wt.% | 82,0 | 80,5 |
| Ex. 3 | 0,5 wt.% | 80,9 | 81,3 |
| | 1,0 wt.% | 81,9 | 81,8 |
| Ex. 4 | 0,5 wt.% | 80,3 | 81,0 |
| | 1,0 wt.% | 81,9 | 82,0 |
| Ex. 5 | 0,5 wt.% | 82,2 | 81,8 |
| | 1,0 wt.% | 83,0 | 82,2 |
| Ex. 6 | 0,5 wt.% | 81,4 | 82,1 |
| | 1,0 wt.% | 82,4 | 82,6 |
| Ex. 7 | 0,5 wt.% | 81,2 | 78,6 |
| | 1,0 wt.% | 81,9 | 78,8 |
| Ex. 8 | 0,5 wt.% | 81,9 | 81,7 |
| | 1,0 wt.% | 82,6 | 81,9 |
| Ex. 9 | 0,5 wt.% | 82,1 | 82,1 |
| | 1,0 wt.% | 82,6 | 82,6 |

Wash result for EMPA 133 color fabric (blue color) (evaluation of % reflectance)

| | Dosage DTI (teo example per DTI-polymer | % reflectance wfk 10 A | % reflectance wfk 20 A |
|---|---|---|---|
| No DTI | | 45,5 | 49,5 |
| Comp. Ex. I | 0,5 wt.% | 79,2 | 80,4 |
| | 1,0 wt.% | 82,2 | 81,6 |
| Comp. Ex. II | 0,5 wt.% | 48,5 | 54,9 |
| | 1,0 wt.% | 49,9 | 55,5 |
| Comp. Ex. III | 0,5 wt.% | 78,0 | 78,5 |
| | 1,0 wt.% | 81,1 | 80,7 |
| Ex. 1 | 0,5 wt.% | 77,5 | 77,7 |
| | 1,0 wt.% | 80,9 | 80,3 |
| Ex. 2 | 0,5 wt.% | 68,7 | 72,2 |
| | 1,0 wt.% | 77,6 | 78,2 |
| Ex. 3 | 0,5 wt.% | 68,8 | 72,6 |
| | 1,0 wt.% | 78,6 | 79,4 |
| Ex. 4 | 0,5 wt.% | 68,7 | 72,5 |
| | 1,0 wt.% | 78,6 | 80,3 |
| Ex. 5 | 0,5 wt.% | 72,2 | 75,9 |
| | 1,0 wt.% | 81,3 | 81,0 |
| Ex. 6 | 0,5 wt.% | 70,7 | 74,3 |
| | 1,0 wt.% | 80,1 | 80,6 |
| Ex. 7 | 0,5 wt.% | 51,7 | 58,5 |
| | 1,0 wt.% | 56,9 | 64,1 |
| Ex. 8 | 0,5 wt.% | 60,8 | 66,8 |
| | 1,0 wt.% | 73,6 | 77,0 |
| Ex. 9 | 0,5 wt.% | 58,5 | 64,5 |
| | 1,0 wt.% | 73,2 | 76.4 |

## Claims

1. A graft polymer comprising:
(A) a polymer backbone as a graft base,
wherein said polymer backbone (A) is obtainable by polymerization of at least one monomer selected from the group of C2- to C10-alkylene oxides,
wherein in case of more than one alkylene oxide monomer being comprised the structure of the polymer backbone is a random polymer, a block polymer or a polymer comprising mixed structures of block units - with each block being a homo-block or a random block itself - and statistical /random parts comprised of two or more alkylene oxides,
and
(B) polymeric sidechains grafted onto the polymer backbone (A), wherein said polymeric sidechains (B) are obtainable by co-polymerization of at least one monomer of (B1) and at least one monomer of (B2)
with the monomers
(B1) being at least one vinyl ester monomer, being preferably selected from vinyl acetate, vinyl propionate and vinyl laurate, more preferably from vinyl acetate and vinyl laurate, and even more preferably vinyl acetate, and most preferably only vinyl acetate, and wherein the remaining amount of vinyl ester may be any other known vinyl ester
and
(B2) being
(B2a) at least one olefinically unsaturated amine-containing monomer, preferably being 1-vinylimidazole or its derivatives such as alkylsubstituted derivatives of 1-vinylimidazole such as 2-methyl-1-vinylimidazole, more preferably 1-vinylimidazole
and
(B2b) optionally at least one further nitrogen-containing monomer, being preferably a vinyllactame-monomer, being preferably selected from N-vinyllactams, such as N-vinylpyrrolidone, N-vinylpiperidone, N-vinylcaprolactam, more preferably N-vinylpyrrolidone, N-vinylcaprolactam, and most preferably N-vinylpyrrolidone,
wherein
- the molecular weight of the polymer backbone (A) as Mn in g/mol is within 500 to 12000 and at least 1000,
- the amount of the polymer backbone (A) in weight percent being based on the total WEIGHT OF THE GRAFT POLYMER is from 30 to less than 89; and
- the amount of polymeric side chains (B) in weight percent being based on the total WEIGHT OF THE GRAFT POLYMER is from more than 11 to 70; and
- the amount of (B1) in weight percent based on the total WEIGHT OF THE GRAFT POLYMER is from 1 to 30; and
- the amount of (B2) in weight percent being based on the total WEIGHT OF THE GRAFT POLYMER is from more than 10 to 60; and
- the amount of (B2a) in weight percent based on the total amount of monomers (B2) is from more than 10 to 100, but at least 10, preferably at least 12, more preferably at least 15 weight percent being based on the total WEIGHT OF THE GRAFT POLYMER; and
- the amount of (B2b) in weight percent is equal to 100 % of the amount of (B2) minus the amount of (B2a).

2. The graft polymer according to claim 1,
wherein the polymer backbone (A) is obtainable by polymerization of ethylene oxide (EO) and optionally at least one other C3-C22-alkylene oxide, the polymer backbone further conforming with i), ii), iii), iv), i)+iii) or ii)+iii), preferably iv), i)+iii) or ii)+iii), more preferably iv), or ii)+iii), with:
i) the at least one other C3-C22-alkylene oxide being selected from 1,2-propylene oxide (PO) and 1,2-butylene oxide,
ii) the polymer backbone (A) is a polymer comprising only EO and optionally PO,
iii) the relative amount of EO in the polymer backbone A is within 10 - 90 weight percent (in relation to the total molar amount of alkylene oxides in the polymer backbone (A)),
iv) no other other C3-C22-alkylene oxide besides EO being comprised in the polymer backbone.

3. The graft polymer according to any of claims 1 to 2, wherein the graft polymer conforms to at least one of the following i), ii) and/or iii):
i) the graft polymer has a polydispersity Mw/Mn of < 7 (with Mw = weight average molecular weight and Mn = number average molecular weight [g/mol / g/mol]),
ii) the polymer backbone (A) is optionally capped at one or both end groups, and if the polymer backbone (A) is capped, the capping is done by C1-C25-alkyl groups,
iii) the bio-degradability of the graft polymer is at least 25% within 28 days when tested under OECD301F.

4. Graft polymer according to any of claims 1 to 3 wherein
(A) the polymer backbone (A) comprises only ethylene oxide as monomer, and/or, preferably "and", the molecular weight of the polymer backbone (A) as Mn in g/mol is within 600 to 3000, measured as disclosed in the description, and/or, preferably "and",
(B) the polymeric side chains consist of the following monomers:
- B1 is vinyl acetate,
- B2a is 1-vinyl imidazole, and
- B2b is a N-vinyllactame, preferably is N-vinylpyrrolidone.

5. Graft polymer according to any of claims 1 to 4, comprising
(A) a polymer backbone (A) which is a polyalkylene oxide comprising more than 70, preferably more than 80, even more preferably more than 90 weight percent of ethylene oxide based on total alkylene oxide, and most preferably only ethylene oxide, and having a molecular weight as Mn in g/mol of within 500 to 12000, preferably not more than 9000, more preferably not more than 6000, even more preferably not more than 3500, further even more preferably not more than 3000, even further even more preferably not more than 2750, and at least 600, more preferably at least 1000, even more preferably at least 1500, and with all ranges being made up by combining any number detailed before for the lower border with any number detailed before as the upper border, specifically as more preferred range the Mn is from is from 600 to 3000, even more preferred from 1000 to 2750, and most preferred from 1500 to 2750, and the polymer backbone (A) being present in the graft polymer in amounts of 45 to 65 weight percent being based on the total WEIGHT OF THE GRAFT POLYMER; and
(B) polymeric side chains (B) in 40 to 55 weight percent being based on the total WEIGHT OF THE GRAFT POLYMER; wherein (B) comprises (B1) and (B2a) and optionally (B2b), with amounts of
(B1) being 5 to 15 weight percent based on the total WEIGHT OF THE GRAFT POLYMER; and
(B2) being 25 to 50 weight percent being based on the total WEIGHT OF THE GRAFT POLYMER;
(B2a) being 15 to 30 weight percent based on the total WEIGHT OF THE GRAFT POLYMER; and
(B2b) being in weight percent equal to [100 % of the amount of (B2)] minus [the amount of (B2a)].

6. The graft polymer according to any of claims 1 to 5, wherein wherein (B1) is vinyl acetate, (B2a) is vinylimidazole, and (B2b) is a vinyl lactame, preferably vinyl pyrrolidone.

7. The graft polymer according to any of claims 1 to 6, having at least one of the following properties: i) a polydispersity Mw/Mn of < 7 - with Mw = weight average molecular weight and Mn = number average molecular weight [g/mol / g/mol], ii) exhibiting a bio-degradability of at least 25 weight % within 28 days when tested under OECD301F.

8. A process for obtaining a graft polymer according to any one of claims 1 to 7, wherein the at least one monomer B1, the at least one monomer B2a, the optional at least one monomer B2b are polymerized in the presence of at least one polymer backbone (A), wherein the polymeric sidechains (B) are obtained by radical polymerization, using radical forming compounds to initiate the radical polymerization.

9. The process according to claim 8, comprising the polymerization of at least one monomer (B1), at least one monomer (B2a), optionally at least one monomer (B2b) in the presence of at least one polymer backbone (A), a free radical-forming initiator (C) and, optionally but preferred, at least one solvent (D) in amounts of up to 50% by weight, based on the sum of components (A), (B1), (B2a), optional (B2b), (C), and solvent (D), at a mean polymerization temperature at which the initiator (C) has a decomposition half-life of from 40 to 500 min, in such a way that the fraction of unconverted graft monomers (B1 and B2) and initiator (C) in the reaction mixture is constantly kept in a quantitative deficiency relative to the polymer backbone (A).

10. Process according to any of claims 8 to 9, wherein solvent is employed only for introducing the radical initiator into the reaction mixture, and no further solvent is added.

11. Process according to any of claims 8 to 10, wherein the process comprises at least one further process step selected from i) to iv):
i) Post-polymerisation;
ii) Purification;
iii) Concentration; and
iv) Drying.

12. Process according to claim 11, wherein the process comprises at least one further process step selected from:
a post-polymerization process step - i.e step i) - that is performed after the main polymerization reaction, wherein preferably a further amount of initiator, optionally dissolved in the solvent(s), is added over a period of 0,5 hour and up to 3 hours, preferably about 1 to 2 hours, more preferably about 1 hour, with the radical initiator and the solvent(s) for the initiator typically - and preferred - being the same as the ones for the main polymerization reaction;and wherein after the polymerization reaction and before the post-polymerisation reaction preferably a period is waited when the main polymerization reaction is left to proceed, before the post-polymerisation reaction is started by starting the addition of further radical initiator, such period being preferably from 10 minutes and up to 4 hours, preferably up to 2 hours, even more preferabl up to 1 hour, and most preferably up to 30 minutes; and wherein the temperature of the post-polymerisation process step is - preferably - the same as in the main polymerization reaction, or is increased, such increase being preferably higher by about 5 to 40°C, preferably 10 to 20°C compared to the temperature of the main polymerisaion reaction; and
a step of subjecting the graft polymer as obtained from the main polymerization or - if performed, the post-polymerisation process - to a means of ii) purification, iii) concentration and/or iv) drying or a combined step of such proceses steps to remove part of or almost all of the remaining solvent(s) - as far as they are removable due to their boiling points - and/or volatiles such as residual monomers, wherein
a. the concentration (step iii)) is performed by removing part of the solvent(s) and optionally also volatiles to increase the solid polymer concentration, by preferably applying a distillation process such as thermal or vacuum distillation, preferably vacuum distillation, which is performed until the desired solid content is achieved, preferably is performed until the desired part or all of the volatile components such as volatile solvents and/or unreacted, volatile monomers, are removed;
b. the drying (step iv)) is performed by subjecting the graft polymer containing at least residual amounts of volatiles such as remaining solvent and/or unreacted monomers etc. to a means of removing the volatiles, such as drying using a roller-drum, a spray-dryer, vacuum drying or freeze-drying, preferably - mainly for cost-reasons - spray-drying; and optionally combining such drying process step with a means of agglomeration or granulation to obtain agglomerated or granulated graft polymer particles, such process being preferably selected from spray-agglomeration, granulation or drying in a fluidized-bed dryer, spray-granulation device;
and/or
c. such previous step(s) (i.e. steps iii) and/or iv)) also serve as a purification means (step ii)).

13. Use of at least one graft polymer according to any of claims 1 to 7 or obtained by or obtainable by the process according to any of claims 8 or 12 in a composition, that is a fabric and home care product, a cleaning composition, or an industrial and institutional cleaning product, cosmetic or personal care product, oil field-formulation such as crude oil emulsion breaker, pigment dispersion for inks such as ink-jet inks, electro plating product, cementitious composition, lacquer, paint, agrochemical formulations, preferably in compositions for fabric and home care, cleaning composition, or an industrial and institutional cleaning product, wherein optionally at least one of the following a) to e) applies in addition:
a) such compositions for fabric and home care, cleaning composition, or an industrial and institutional cleaning product additionally comprises at least one enzyme;
b) such compositions for fabric and home care, cleaning composition, or an industrial and institutional cleaning product is employed for inhibiting the transfer of dyes;
c) wherein the at least one graft polymer is present at a concentration of from about 0.05% to about 10% in weight % in relation to the total weight of such composition or product;
d) such composition or product further comprises from about 1% to about 70% by weight of a surfactant system;
e) such compositions or product further comprises at least one antimicrobial agent.

14. A laundry detergent, a cleaning composition or a fabric and home care product containing at least one graft polymer according to any of claims 1 to 7 or obtained by or obtainable by the process according to any of claims 8 or 12, preferably exhibiting dye transfer inhibition properties, wherein optionally at least one of the following applies in addition:
a) wherein the at least one graft polymer is present at a concentration of from about 0.05% to about 10% in weight % in relation to the total weight of such composition or product, further comprising from about 1% to about 70% by weight of a surfactant system, optionally comprising at least one antimicrobial agent and/or at least one enzyme;
b) further comprises 2-phenoxyethanol as anti-microbial agent, preferably in an amount ranging from 2 ppm to 5%, more preferably comprising 0.1 to 2%, all by weight of the composition;
c) further comprises 4,4'-dichloro 2-hydroxydiphenylether in a concentration from 0.001 to 3%, preferably 0.002 to 1%, more preferably 0.01 to 0.6%, each by weight of the composition.

15. A method of preserving an laundry detergent, a cleaning composition or a fabric and home care product according to claim 14 against microbial contamination or growth, which method comprises addition of 2-phenoxyethanol as an antimicrobial agent to the composition which is an aqueous composition comprising water as solvent.

16. A method of laundering fabric or of cleaning hard surfaces, which method comprises treating a fabric or a hard surface with a composition or product according to claim 14, comprising 4,4'-dichoro 2-hydroxydiphenylether, preferably comprising 4,4'-dichloro 2-hydroxydiphenylether in a concentration from 0.001 to 3%, preferably 0.002 to 1%, more preferably 0.01 to 0.6%, each by weight of the composition.

## Patentansprüche

1. Pfropfpolymer, umfassend:
ein Polymerrückgrat als Pfropfbasis,
wobei das Polymerrückgrat (A) durch Polymerisation von mindestens einem Monomer ausgewählt aus der Gruppe der C₂- bis C₁₀-Alkylenoxide erhältlich ist,
wobei - im Fall, dass mehr als ein Alkylenoxid-Monomer enthalten ist - die Struktur des Polymerrückgrats ein statistisches Polymer, ein Blockpolymer oder ein Polymer mit gemischten Strukturen aus Blockeinheiten - wobei jeder Block ein Homo- oder ein statistischer Block sein kann - und statistischen/zufälligen Abschnitten aus zwei oder mehr Alkylenoxiden ist,
und
polymeren Seitenketten, die auf das Polymerrückgrat (A) aufgepfropft sind, wobei diese polymeren Seitenketten (B) durch Copolymerisation von mindestens einem Monomer aus (B1) und mindestens einem Monomer aus (B2) erhältlich sind,
wobei die Monomere
(B1) mindestens ein Vinylester-Monomer sind, vorzugsweise ausgewählt aus Vinylacetat, Vinylpropionat und Vinyllaurat, besonders bevorzugt aus Vinylacetat und Vinyllaurat, noch bevorzugter Vinylacetat, und am bevorzugtesten ausschließlich Vinylacetat, wobei der verbleibende Anteil an Vinylester ein beliebiger anderer bekannter Vinylester sein kann,
und
(B2)
(B2a) mindestens ein olefinisch ungesättigtes aminhaltiges Monomer ist, vorzugsweise 1-Vinylimidazol oder dessen Derivate wie alkylsubstituierte Derivate von 1-Vinylimidazol, z. B. 2-Methyl-1-vinylimidazol, besonders bevorzugt 1-Vinylimidazol,
und
(B2b) optional mindestens ein weiteres stickstoffhaltiges Monomer ist, vorzugsweise ein Vinyllactam-Monomer, ausgewählt aus N-Vinyllactamen wie N-Vinylpyrrolidon, N-Vinylpiperidon, N-Vinylcaprolactam, besonders bevorzugt N-Vinylpyrrolidon, N-Vinylcaprolactam, und am bevorzugtesten N-Vinylpyrrolidon, wobei
das Molekulargewicht des Polymerrückgrats (A) als Mn in g/mol im Bereich von 500 bis 12000 liegt und mindestens 1000 beträgt,
der Anteil des Polymerrückgrats (A) in Gewichtsprozent bezogen auf das Gesamtgewicht des Pfropfpolymers 30 bis weniger als 89 beträgt,
der Anteil der polymeren Seitenketten (B) in Gewichtsprozent bezogen auf das Gesamtgewicht des Pfropfpolymers mehr als 11 bis 70 beträgt,
der Anteil von (B1) in Gewichtsprozent bezogen auf das Gesamtgewicht des Pfropfpolymers 1 bis 30 beträgt,
der Anteil von (B2) in Gewichtsprozent bezogen auf das Gesamtgewicht des Pfropfpolymers mehr als 10 bis 60 beträgt,
der Anteil von (B2a) in Gewichtsprozent bezogen auf die Gesamtmenge der Monomere (B2) mehr als 10 bis 100 beträgt, jedoch mindestens 10, vorzugsweise mindestens 12, besonders bevorzugt mindestens 15 Gewichtsprozent bezogen auf das Gesamtgewicht des Pfropfpolymers,
und der Anteil von (B2b) in Gewichtsprozent gleich 100 % der Menge von (B2) minus der Menge von (B2a) ist.

2. Pfropfpolymer nach Anspruch 1,
wobei das Polymerrückgrat (A) durch Polymerisation von Ethylenoxid (EO) und optional mindestens einem weiteren C₃-C₂₂-Alkylenoxid erhältlich ist, wobei das Polymerrückgrat weiterhin eine der folgenden Strukturen aufweist: i), ii), iii), iv), i)+iii) oder ii)+iii), vorzugsweise iv), i)+iii) oder ii)+iii), besonders bevorzugt iv) oder ii)+iii), wobei:
das mindestens eine weitere C₃-C₂₂-Alkylenoxid ausgewählt ist aus 1,2-Propylenglycolether (PO) und 1,2-Butylenglycolether,
das Polymerrückgrat (A) ein Polymer ist, das nur EO und optional PO enthält,
der relative Anteil von EO im Polymerrückgrat (A) im Bereich von 10-90 Gewichtsprozent liegt (bezogen auf die gesamte molare Menge der Alkylenoxide im Polymerrückgrat (A)),
kein weiteres C₃-C₂₂-Alkylenoxid außer EO im Polymerrückgrat enthalten ist.

3. Pfropfpolymer nach einem der Ansprüche 1 bis 2, wobei das Pfropfpolymer mindestens eine der folgenden Eigenschaften aufweist:
i) eine Polydispersität Mw/Mn von < 7 (wobei Mw = gewichtsmittleres Molekulargewicht und Mn = zahlenmittleres Molekulargewicht [g/mol / g/mol]),
ii) das Polymerrückgrat (A) ist optional an einem oder beiden Endgruppen endgruppenmodifiziert, wobei die Endgruppenmodifikation durch C₁-C₂₅-Alkylgruppen erfolgt,
iii) die biologische Abbaubarkeit des Pfropfpolymers beträgt mindestens 25 % innerhalb von 28 Tagen gemäß OECD301F.

4. Pfropfpolymer nach einem der Ansprüche 1 bis 3, wobei
das Polymerrückgrat (A) ausschließlich Ethylenoxid als Monomer enthält,
und/oder, vorzugsweise "und", das Molekulargewicht des Polymerrückgrats (A) als Mn in g/molim Bereich von 600 bis 3000 liegt, gemessen wie in der Beschreibung angegeben,
und/oder, vorzugsweise "und",
die polymeren Seitenketten aus folgenden Monomeren bestehen:
B1 ist Vinylacetat,
B2a ist 1-Vinylimidazol, und
B2b ist ein N-Vinyllactam, vorzugsweise N-Vinylpyrrolidon.

5. Pfropfpolymer nach einem der Ansprüche 1 bis 4, umfassend
ein Polymerrückgrat (A), das ein Polyalkylenoxid ist, das mehr als 70, vorzugsweise mehr als 80, besonders bevorzugt mehr als 90 Gewichtsprozent Ethylenoxid bezogen auf das gesamte Alkylenoxid enthält, und am bevorzugtesten ausschließlich Ethylenoxid, und ein Molekulargewicht Mn in g/mol im Bereich von 500 bis 12000 aufweist, vorzugsweise höchstens 9000, besonders bevorzugt höchstens 6000, noch bevorzugter höchstens 3500, weiter noch bevorzugter höchstens 3000, noch weiter bevorzugter höchstens 2750, und mindestens 600, bevorzugt mindestens 1000, besonders bevorzugt mindestens 1500, wobei alle Bereiche durch Kombination der genannten unteren und oberen Grenzwerte gebildet werden können, insbesondere ist der bevorzugte Bereich Mn von 600 bis 3000, noch bevorzugter von 1000 bis 2750, und am bevorzugtesten von 1500 bis 2750, und wobei das Polymerrückgrat (A) im Pfropfpolymer in Mengen von 45 bis 65 Gewichtsprozent bezogen auf das Gesamtgewicht des Pfropfpolymers vorliegt; und
polymere Seitenketten (B) in 40 bis 55 Gewichtsprozent bezogen auf das Gesamtgewicht des Pfropfpolymers; wobei (B) (B1) und (B2a) und optional (B2b) umfasst, mit folgenden Mengen:
(B1) 5 bis 15 Gewichtsprozent bezogen auf das Gesamtgewicht des Pfropfpolymers;
(B2) 25 bis 50 Gewichtsprozent bezogen auf das Gesamtgewicht des Pfropfpolymers;
(B2a) 15 bis 30 Gewichtsprozent bezogen auf das Gesamtgewicht des Pfropfpolymers; und
(B2b) in Gewichtsprozent entsprechend [100 % der Menge von (B2)] minus [der Menge von (B2a)].

6. Pfropfpolymer nach einem der Ansprüche 1 bis 5, wobei (B1) Vinylacetat ist, (B2a) Vinylimidazol ist, und (B2b) ein Vinyllactam ist, vorzugsweise Vinylpyrrolidon.

7. Pfropfpolymer nach einem der Ansprüche 1 bis 6, das mindestens eine der folgenden Eigenschaften aufweist:
i) eine Polydispersität Mw/Mn von < 7 - wobei Mw = gewichtsmittleres Molekulargewicht und Mn = zahlenmittleres Molekulargewicht [g/mol / g/mol],
ii) eine biologische Abbaubarkeit von mindestens 25 Gewichtsprozent innerhalb von 28 Tagen gemäß OECD301F.

8. Verfahren zur Herstellung eines Pfropfpolymers nach einem der Ansprüche 1 bis 7, wobei mindestens ein Monomer B1, mindestens ein Monomer B2a und optional mindestens ein Monomer B2b in Gegenwart von mindestens einem Polymerrückgrat (A) polymerisiert werden, wobei die polymeren Seitenketten (B) durch radikalische Polymerisation unter Verwendung radikalbildender Verbindungen zur Initiierung der radikalischen Polymerisation erhalten werden.

9. Verfahren nach Anspruch 8, umfassend die Polymerisation von mindestens einem Monomer (B1), mindestens einem Monomer (B2a), optional mindestens einem Monomer (B2b) in Gegenwart von mindestens einem Polymerrückgrat (A), eines radikalbildenden Initiators (C) und optional, aber bevorzugt, mindestens eines Lösungsmittels (D) in Mengen von bis zu 50 Gewichtsprozent, bezogen auf die Summe der Komponenten (A), (B1), (B2a), optional (B2b), (C) und Lösungsmittel (D), bei einer mittleren Polymerisationstemperatur, bei der der Initiator (C) eine Zersetzungshalbwertszeit von 40 bis 500 Minuten hat, wobei die Menge an unverbrauchten Pfropfmonomeren (B1 und B2) und Initiator (C) in der Reaktionsmischung konstant in einem quantitativen Defizit relativ zum Polymerrückgrat (A) gehalten wird.

10. Verfahren nach einem der Ansprüche 8 bis 9, wobei das Lösungsmittel nur zur Einbringung des Radikalinitiators in die Reaktionsmischung verwendet wird und kein weiteres Lösungsmittel zugesetzt wird.

11. Verfahren nach einem der Ansprüche 8 bis 10, wobei das Verfahren mindestens einen weiteren Prozessschritt aus i) bis iv) umfasst:
i) Nachpolymerisation;
ii) Reinigung;
iii) Konzentrierung; und
iv) Trocknung.

12. Verfahren nach Anspruch 11, wobei das Verfahren mindestens einen weiteren Prozessschritt umfasst, ausgewählt aus:
einem Nachpolymerisationsschritt - d. h. Schritt i) - der nach der Hauptpolymerisationsreaktion durchgeführt wird, wobei vorzugsweise eine weitere Menge Initiator, optional gelöst in Lösungsmittel(n), über einen Zeitraum von 0,5 bis 3 Stunden, vorzugsweise etwa 1 bis 2 Stunden, besonders bevorzugt etwa 1 Stunde zugegeben wird, wobei der Radikalinitiator und das Lösungsmittel für den Initiator typischerweise - und bevorzugt - dieselben sind wie in der Hauptpolymerisation;
und wobei nach der Polymerisationsreaktion und vor der Nachpolymerisation vorzugsweise eine Wartezeit eingehalten wird, in der die Hauptpolymerisation weiterläuft, bevor die Nachpolymerisation durch Zugabe weiteren Initiators gestartet wird, wobei diese Wartezeit vorzugsweise 10 Minuten bis 4 Stunden, vorzugsweise bis 2 Stunden, noch bevorzugter bis 1 Stunde, und am bevorzugtesten bis 30 Minuten beträgt;
und wobei die Temperatur der Nachpolymerisation vorzugsweise gleich oder erhöht ist, wobei die Erhöhung vorzugsweise 5 bis 40 °C, besonders bevorzugt 10 bis 20 °C über der Temperatur der Hauptpolymerisation liegt;
und/oder
einem Schritt, in dem das aus der Hauptpolymerisation oder - falls durchgeführt - der Nachpolymerisation erhaltene Pfropfpolymer einem Mittel zur Reinigung (ii), Konzentrierung (iii) und/oder Trocknung (iv) oder einem kombinierten Schritt dieser Prozesse unterzogen wird, um einen Teil oder nahezu alle verbleibenden Lösungsmittel - soweit aufgrund ihres Siedepunkts entfernbar - und/oder flüchtige Bestandteile wie Restmonomere zu entfernen, wobei
die Konzentrierung (Schritt iii)) durch Entfernung eines Teils der Lösungsmittel und optional auch flüchtiger Bestandteile erfolgt, um die Feststoffkonzentration zu erhöhen, vorzugsweise durch Destillation, insbesondere Vakuumdestillation, bis der gewünschte Feststoffgehalt erreicht ist oder die flüchtigen Bestandteile entfernt sind;
die Trocknung (Schritt iv)) durch ein Mittel zur Entfernung flüchtiger Bestandteile erfolgt, z. B. Trocknung mittels Walzentrockner, Sprühtrockner, Vakuumtrocknung oder Gefriertrocknung, vorzugsweise - hauptsächlich aus Kostengründen - Sprühtrocknung; und optional kombiniert mit einem Agglomerations- oder Granulationsverfahren zur Herstellung agglomerierter oder granulierten Pfropfpolymerpartikel, vorzugsweise ausgewählt aus Sprühagglomeration, Granulation oder Trocknung in einem Wirbelschichttrockner, Sprühgranulator;
und/oder
die vorherigen Schritte (d. h. Schritte iii) und/oder iv)) auch als Reinigungsverfahren (Schritt ii)) dienen.

13. Verwendung von mindestens einem Pfropfpolymer nach einem der Ansprüche 1 bis 7 oder hergestellt nach einem der Ansprüche 8 oder 12 in einer Zusammensetzung, die ein Wasch- und Reinigungsmittel, eine Reinigungszusammensetzung oder ein industrielles und institutionelles Reinigungsmittel, ein kosmetisches oder Körperpflegeprodukt, eine Formulierung für die Erdölgewinnung wie ein Rohölemulsionsbrecher, eine Pigmentdispersion für Tinten wie Tintenstrahltinten, ein Galvanikprodukt, eine zementhaltige Zusammensetzung, ein Lack, eine Farbe oder eine agrochemische Formulierung ist, vorzugsweise in Zusammensetzungen für Wasch- und Reinigungsmittel oder industrielle und institutionelle Reinigungsmittel, wobei optional zusätzlich mindestens eines der folgenden Merkmale a) bis e) zutrifft:
a) solche Zusammensetzungen enthalten zusätzlich mindestens ein Enzym;
b) solche Zusammensetzungen werden zur Hemmung des Farbstofftransfers eingesetzt;
c) das mindestens eine Pfropfpolymer ist in einer Konzentration von etwa 0,05 % bis etwa 10 Gewichtsprozent bezogen auf das Gesamtgewicht der Zusammensetzung enthalten;
d) die Zusammensetzung enthält zusätzlich 1 % bis 70 % Gewichtsprozent eines Tensidsystems;
e) die Zusammensetzung enthält zusätzlich mindestens ein antimikrobielles Mittel.

14. Waschmittel, Reinigungszusammensetzung oder Wasch- und Reinigungsmittel enthaltend mindestens ein Pfropfpolymer nach einem der Ansprüche 1 bis 7 oder hergestellt nach einem der Ansprüche 8 oder 12, vorzugsweise mit Farbstoffübertragungshemmung, wobei optional mindestens eines der folgenden Merkmale zusätzlich zutrifft:
a) das mindestens eine Pfropfpolymer ist in einer Konzentration von etwa 0,05 % bis etwa 10 Gewichtsprozent bezogen auf das Gesamtgewicht der Zusammensetzung enthalten, zusätzlich umfassend 1 % bis 70 % Gewichtsprozent eines Tensidsystems, optional umfassend mindestens ein antimikrobielles Mittel und/oder mindestens ein Enzym;
b) enthält zusätzlich 2-Phenoxyethanol als antimikrobielles Mittel, vorzugsweise in einer Menge von 2 ppm bis 5 %, besonders bevorzugt 0,1 % bis 2 %, jeweils bezogen auf das Gesamtgewicht der Zusammensetzung;
c) enthält zusätzlich 4,4'-Dichlor-2-hydroxydiphenylether in einer Konzentration von 0,001 % bis 3 %, vorzugsweise 0,002 % bis 1 %, besonders bevorzugt 0,01 % bis 0,6 %, jeweils bezogen auf das Gesamtgewicht der Zusammensetzung.

15. Verfahren zur Konservierung eines Waschmittels, einer Reinigungszusammensetzung oder eines Wasch- und Reinigungsmittels gemäß Anspruch 14 gegen mikrobielle Kontamination oder Wachstum, wobei 2-Phenoxyethanol als antimikrobielles Mittel einer wässrigen Zusammensetzung zugesetzt wird, die Wasser als Lösungsmittel enthält.

16. Verfahren zum Waschen von Textilien oder Reinigen harter Oberflächen, umfassend die Behandlung eines Textils oder einer harten Oberfläche mit einer Zusammensetzung oder einem Produkt gemäß Anspruch 14, umfassend 4,4'-Dichlor-2-hydroxydiphenylether, vorzugsweise in einer Konzentration von 0,001 % bis 3 %, vorzugsweise 0,002 % bis 1 %, besonders bevorzugt 0,01 % bis 0,6 %, jeweils bezogen auf das Gesamtgewicht der Zusammensetzung.

## Revendications

1. Polymère greffé comprenant :
une chaîne polymère principale servant de base de greffage,
ladite chaîne polymère principale (A) étant obtenue par polymérisation d'au moins un monomère choisi dans le groupe des oxydes d'alkylène en C₂ à C₁₀,
dans le cas où plusieurs monomères d'oxyde d'alkylène sont présents, la structure de la chaîne polymère principale est un polymère statistique, un polymère bloc ou un polymère comprenant des structures mixtes de blocs - chaque bloc étant un homobloc ou un bloc statistique - et des parties statistiques/aléatoires composées d'au moins deux oxydes d'alkylène,
et
des chaînes latérales polymères greffées sur la chaîne polymère principale (A), lesdites chaînes latérales polymères (B) étant obtenues par copolymérisation d'au moins un monomère (B1) et d'au moins un monomère (B2),
les monomères
(B1) étant au moins un monomère de vinyle-ester, de préférence choisi parmi l'acétate de vinyle, le propionate de vinyle et le laurate de vinyle, plus préférablement parmi l'acétate de vinyle et le laurate de vinyle, encore plus préférablement l'acétate de vinyle, et tout particulièrement uniquement l'acétate de vinyle, le reste pouvant être tout autre vinyle-ester connu,
et
(B2)
(B2a) étant au moins un monomère insaturé oléfinique contenant une amine, de préférence le 1-vinylimidazole ou ses dérivés tels que les dérivés alkylés du 1-vinylimidazole, comme le 2-méthyl-1-vinylimidazole, plus préférablement le 1-vinylimidazole,
et
(B2b) étant facultativement au moins un autre monomère contenant de l'azote, de préférence un monomère de vinyllactame, de préférence choisi parmi les N-vinyllactames tels que la N-vinylpyrrolidone, la N-vinylpipéridone, la N-vinylcaprolactame, plus préférablement la N-vinylpyrrolidone, la N-vinylcaprolactame, et tout particulièrement la N-vinylpyrrolidone,
dans lequel
la masse molaire moyenne en nombre (Mn) de la chaîne polymère principale (A) est comprise entre 500 et 12000 g/mol et est d'au moins 1000,
la quantité de chaîne polymère principale (A) en pourcentage massique, basée sur la masse totale du polymère greffé, est comprise entre 30 et moins de 89 %,
la quantité de chaînes latérales polymères (B) en pourcentage massique, basée sur la masse totale du polymère greffé, est comprise entre plus de 11 et 70 %,
la quantité de (B1) en pourcentage massique, basée sur la masse totale du polymère greffé, est comprise entre 1 et 30 %,
la quantité de (B2) en pourcentage massique, basée sur la masse totale du polymère greffé, est comprise entre plus de 10 et 60 %,
la quantité de (B2a) en pourcentage massique, basée sur la quantité totale de monomères (B2), est comprise entre plus de 10 et 100 %, mais au moins 10 %, de préférence au moins 12 %, plus préférablement au moins 15 %, basée sur la masse totale du polymère greffé,
et la quantité de (B2b) en pourcentage massique est égale à 100 % de la quantité de (B2) moins la quantité de (B2a).

2. Polymère greffé selon la revendication 1,
dans lequel la chaîne polymère principale (A) est obtenue par polymérisation de l'oxyde d'éthylène (EO) et éventuellement d'au moins un autre oxyde d'alkylène en C₃-C₂₂, ladite chaîne polymère principale répondant à l'une des structures i), ii), iii), iv), i)+iii) ou ii)+iii), de préférence iv), i)+iii) ou ii)+iii), plus préférablement iv) ou ii)+iii), dans lesquelles :
l'autre oxyde d'alkylène en C₃-C₂₂ est choisi parmi l'oxyde de propylène (PO) et l'oxyde de butylène, la chaîne polymère principale (A) est un polymère ne contenant que EO et éventuellement PO,
la proportion relative de EO dans la chaîne polymère principale (A) est comprise entre 10 et 90 % en masse (par rapport à la quantité molaire totale d'oxydes d'alkylène dans la chaîne polymère principale (A)),
aucun autre oxyde d'alkylène en C₃-C₂₂ que EO n'est présent dans la chaîne polymère principale.

3. Polymère greffé selon l'une quelconque des revendications 1 à 2, dans lequel le polymère greffé présente au moins l'une des caractéristiques suivantes :
i) une polydispersité Mw/Mn inférieure à 7 (Mw = masse molaire moyenne en poids, Mn = masse molaire moyenne en nombre [g/mol / g/mol]),
ii) la chaîne polymère principale (A) est facultativement terminée à une ou deux extrémités, et si elle est terminée, la terminaison est réalisée par des groupes alkyle en C₁-C₂₅,
iii) la biodégradabilité du polymère greffé est d'au moins 25 % en 28 jours selon le test OECD301F.

4. Polymère greffé selon l'une quelconque des revendications 1 à 3, dans lequel
la chaîne polymère principale (A) comprend uniquement de l'oxyde d'éthylène comme monomère,
et/ou, de préférence « et », la masse molaire Mn de la chaîne polymère principale (A) est comprise entre 600 et 3000 g/mol, mesurée comme décrit dans la description,
et/ou, de préférence « et »,
les chaînes latérales polymères sont constituées des monomères suivants :
B1 est l'acétate de vinyle,
B2a est le 1-vinylimidazole,
et B2b est un N-vinyllactame, de préférence la N-vinylpyrrolidone.

5. Polymère greffé selon l'une quelconque des revendications 1 à 4, comprenant
une chaîne polymère principale (A) qui est un poly(oxyde d'alkylène) comprenant plus de 70 %, de préférence plus de 80 %, encore plus préférablement plus de 90 % en poids d'oxyde d'éthylène, basé sur la quantité totale d'oxyde d'alkylène, et tout particulièrement uniquement de l'oxyde d'éthylène, et ayant une masse molaire Mn en g/mol comprise entre 500 et 12000, de préférence au plus 9000, plus préférablement au plus 6000, encore plus préférablement au plus 3500, encore plus préférablement au plus 3000, et encore plus préférablement au plus 2750, et au moins 600, plus préférablement au moins 1000, encore plus préférablement au moins 1500, tous les intervalles étant formés par combinaison de n'importe quelle valeur inférieure avec n'importe quelle valeur supérieure mentionnée ci-dessus, en particulier l'intervalle préféré de Mn est de 600 à 3000, encore plus préféré de 1000 à 2750, et tout particulièrement de 1500 à 2750, et la chaîne polymère principale (A) étant présente dans le polymère greffé en une quantité de 45 à 65 % en poids, basée sur le poids total du polymère greffé ;
et
des chaînes latérales polymères (B) en une quantité de 40 à 55 % en poids, basée sur le poids total du polymère greffé ;
dans lequel (B) comprend (B1) et (B2a) et éventuellement (B2b), avec les quantités suivantes :
(B1) de 5 à 15 % en poids, basé sur le poids total du polymère greffé ;
(B2) de 25 à 50 % en poids, basé sur le poids total du polymère greffé ;
(B2a) de 15 à 30 % en poids, basé sur le poids total du polymère greffé ;
et (B2b) en pourcentage massique égal à [100 % de la quantité de (B2)] moins [la quantité de (B2a)].

6. Polymère greffé selon l'une quelconque des revendications 1 à 5, dans lequel (B1) est l'acétate de vinyle, (B2a) est le vinylimidazole, et (B2b) est un vinyllactame, de préférence la vinylpyrrolidone.

7. Polymère greffé selon l'une quelconque des revendications 1 à 6, présentant au moins l'une des propriétés suivantes :
i) une polydispersité Mw/Mn inférieure à 7 - avec Mw = masse molaire moyenne en poids et Mn = masse molaire moyenne en nombre [g/mol / g/mol],
ii) une biodégradabilité d'au moins 25 % en poids dans les 28 jours selon le test OECD301F.

8. Procédé de préparation d'un polymère greffé selon l'une quelconque des revendications 1 à 7, dans lequel au moins un monomère B1, au moins un monomère B2a, et éventuellement au moins un monomère B2b sont polymérisés en présence d'au moins une chaîne polymère principale (A), les chaînes latérales polymères (B) étant obtenues par polymérisation radicalaire, en utilisant des composés générateurs de radicaux pour initier la polymérisation radicalaire.

9. Procédé selon la revendication 8, comprenant la polymérisation d'au moins un monomère (B1), d'au moins un monomère (B2a), éventuellement d'au moins un monomère (B2b), en présence d'au moins une chaîne polymère principale (A), d'un initiateur générateur de radicaux (C) et, facultativement mais de préférence, d'au moins un solvant (D) en quantités allant jusqu'à 50 % en poids, basé sur la somme des composants (A), (B1), (B2a), éventuellement (B2b), (C) et solvant (D), à une température moyenne de polymérisation à laquelle l'initiateur (C) a une demi-vie de décomposition comprise entre 40 et 500 minutes, de telle sorte que la fraction de monomères greffés non convertis (B1 et B2) et d'initiateur (C) dans le mélange réactionnel est constamment maintenue en déficit quantitatif par rapport à la chaîne polymère principale (A).

10. Procédé selon l'une quelconque des revendications 8 à 9, dans lequel le solvant est utilisé uniquement pour introduire l'initiateur radicalaire dans le mélange réactionnel, et aucun autre solvant n'est ajouté.

11. Procédé selon l'une quelconque des revendications 8 à 10, dans lequel le procédé comprend au moins une étape supplémentaire choisie parmi i) à iv) :
i) post-polymérisation ;
ii) purification ;
iii) concentration ; et
iv) séchage.

12. Procédé selon la revendication **11,** dans lequel le procédé comprend au moins une étape supplémentaire choisie parmi :
une étape de post-polymérisation - c'est-à-dire l'étape i) - réalisée après la réaction principale de polymérisation, dans laquelle de préférence une quantité supplémentaire d'initiateur, éventuellement dissous dans le(s) solvant(s), est ajoutée sur une période de 0,5 à 3 heures, de préférence environ 1 à 2 heures, plus préférablement environ 1 heure, l'initiateur radicalaire et le(s) solvant(s) étant typiquement - et de préférence - les mêmes que ceux utilisés pour la polymérisation principale ;
et dans laquelle, après la réaction de polymérisation et avant la post-polymérisation, une période d'attente est de préférence observée pendant laquelle la réaction principale se poursuit, avant que la post-polymérisation ne soit démarrée par l'ajout de l'initiateur supplémentaire, ladite période étant de préférence de 10 minutes à 4 heures, de préférence jusqu'à 2 heures, encore plus préférablement jusqu'à 1 heure, et tout particulièrement jusqu'à 30 minutes ;
et dans laquelle la température de la post-polymérisation est - de préférence - la même que celle de la polymérisation principale, ou est augmentée, ladite augmentation étant de préférence de 5 à 40 °C, de préférence de 10 à 20 °C par rapport à la température de la polymérisation principale ;
et/ou
une étape dans laquelle le polymère greffé obtenu à partir de la polymérisation principale ou - si réalisée - de la post-polymérisation est soumis à un moyen de ii) purification, iii) concentration et/ou iv) séchage, ou à une étape combinée de ces procédés, afin d'éliminer une partie ou presque la totalité du ou des solvants restants - dans la mesure où ils sont éliminables en raison de leur point d'ébullition - et/ou des composés volatils tels que les monomères résiduels,
la concentration (étape iii)) étant réalisée par élimination d'une partie du ou des solvants et éventuellement aussi des composés volatils afin d'augmenter la concentration en polymère solide, de préférence par distillation thermique ou sous vide, de préférence sous vide, jusqu'à obtention de la teneur en solides souhaitée ou jusqu'à élimination des composants volatils ;
le séchage (étape iv)) étant réalisé par soumission du polymère greffé contenant encore des composés volatils à un moyen d'élimination de ces volatils, tel que séchage sur cylindre chauffant, séchage par pulvérisation, séchage sous vide ou lyophilisation, de préférence - principalement pour des raisons économiques - par séchage par pulvérisation ; et éventuellement combiné à un procédé d'agglomération ou de granulation pour obtenir des particules de polymère greffé agglomérées ou granulées, ce procédé étant de préférence choisi parmi l'agglomération par pulvérisation, la granulation ou le séchage dans un lit fluidisé, un dispositif de granulation par pulvérisation ;
et/ou
les étapes précédentes (c'est-à-dire étapes iii) et/ou iv)) servant également de moyen de purification (étape ii)).

13. Utilisation d'au moins un polymère greffé selon l'une quelconque des revendications 1 à 7 ou obtenu selon l'un des procédés des revendications 8 ou 12 dans une composition, qui est un produit de soin du linge et de la maison, une composition de nettoyage, ou un produit de nettoyage industriel et institutionnel, un produit cosmétique ou de soin personnel, une formulation pour l'industrie pétrolière telle qu'un désémulsifiant de pétrole brut, une dispersion de pigments pour encres telles que les encres jet d'encre, un produit de galvanoplastie, une composition cimentaire, une laque, une peinture, une formulation agrochimique, de préférence dans des compositions pour le soin du linge et de la maison, des compositions de nettoyage ou des produits de nettoyage industriel et institutionnel, dans lesquels, en option, au moins l'un des éléments suivants a) à e) s'applique en plus :
a) ces compositions comprennent en outre au moins une enzyme ;
b) ces compositions sont utilisées pour inhiber le transfert de colorants ;
c) le ou les polymères greffés sont présents à une concentration d'environ 0,05 % à environ 10 % en poids par rapport au poids total de la composition ;
d) la composition comprend en outre de 1 % à 70 % en poids d'un système tensioactif ;
e) la composition comprend en outre au moins un agent antimicrobien.

14. Détergent, composition de nettoyage ou produit de soin du linge et de la maison contenant au moins un polymère greffé selon l'une quelconque des revendications 1 à 7 ou obtenu selon l'un des procédés des revendications 8 ou 12, présentant de préférence des propriétés d'inhibition du transfert de colorants, dans lequel, en option, au moins l'un des éléments suivants s'applique en plus :
a) le ou les polymères greffés sont présents à une concentration d'environ 0,05 % à environ 10 % en poids par rapport au poids total de la composition, comprenant en outre de 1 % à 70 % en poids d'un système tensioactif, comprenant éventuellement au moins un agent antimicrobien et/ou au moins une enzyme ;
b) comprend en outre du 2-phénoxyéthanol comme agent antimicrobien, de préférence en une quantité allant de 2 ppm à 5 %, plus préférablement de 0,1 à 2 %, en poids de la composition ;
c) comprend en outre du 4,4'-dichloro-2-hydroxydiphényléther à une concentration de 0,001 à 3 %, de préférence de 0,002 à 1 %, plus préférablement de 0,01 à 0,6 %, en poids de la composition.

15. Procédé de conservation d'un détergent, d'une composition de nettoyage ou d'un produit de soin du linge et de la maison selon la revendication **14** contre la contamination ou la croissance microbienne, ledit procédé comprenant l'ajout de 2-phénoxyéthanol comme agent antimicrobien à la composition aqueuse contenant de l'eau comme solvant.

16. Procédé de lavage de textiles ou de nettoyage de surfaces dures, ledit procédé comprenant le traitement d'un textile ou d'une surface dure avec une composition ou un produit selon la revendication 14, comprenant du 4,4'-dichloro-2-hydroxydiphényléther, de préférence à une concentration de 0,001 à 3 %, de préférence de 0,002 à 1 %, plus préférablement de 0,01 à 0,6 %, en poids de la composition.
